# EUROPEAN PATENT APPLICATION

(11) **EP 1 803 983 A1**
(43) Date of publication of application: **04.07.2007**
(21) Application number: 05783683.5
(22) Date of filing: 16.09.2005
(51) Int. Cl.: F16L 39/00, F16J 15/10

(54) **STRUCTURE FOR CONNECTION BETWEEN INTEGRATED PANEL AND FLUID DEVICE**

(30) Priority: 22.09.2004 JP 2004274559; 05.11.2004 JP 2004322295
(71) Applicant: NIPPON PILLAR PACKING CO., LTD., Osaka-shi, Osaka 532-0022 (JP)
(72) Inventor: KATSURA, Masayoshi, Nippon Pillar Packing Co. Ltd., Sanda-shi, Hyogo 6691333 (JP)
(74) Representative: Fleuchaus, Michael A.
(86) International application number: PCT/JP2005/017138
(87) International publication number: WO 2006/033299

(57) **Abstract**

A connecting structure for an integration panel and a fluid device in which an excellent sealing property can be held even when substantially no further fastening is performed, and the assembling workability is improved is provided. Therefore, an integration panel 1 and a valve 2 are communicatingly connected to each other by using an annular gasket G in a state where circular pipe-like fluid passages 16, 19 are sealed. Annular projections 11, 21 are formed on first and second fluid supply/discharge port portions 1A, 2A. The gasket G is a fluororesin-made gasket having a pair of annular grooves 51, 51 which are formed on an outer diameter-side portion of a fluid path W so as to be fitted with the annular projections 11, 21, respectively. Holding means I for holding a joined state where the integration panel 1 and the valve 2 are attracted to each other, and the annular projections 11, 21 of the first and second fluid supply/discharge port portions 1A, 2A are fitted to the annular grooves 51 of the gasket G, respectively to form a fitting sealing portion 10 is provided.

## Description

### Technical Field

The present invention relates to a connecting structure for an integration panel and a fluid device, and more particularly to a connecting structure for connecting an integration panel for a fluid which is expected to be largely used, with a fluid device such as a pump, a valve, or an accumulator via a gasket in a sealed state in a piping system or the like for high-purity liquid, ultrapure water, cleaning liquid, or the like that is handled in a production process in various technical fields such as semiconductor production, medical and pharmaceutical production, food processing, and chemical industry.

### Background Art

An example of such a connecting structure is a structure where a valve which is an example of a fluid device is connected and coupled to an integration panel in which a fluid passage is internally formed, by causing a pair of supply/discharge flow paths to communicate with each other. Connecting structures are disclosed in Patent Reference 1 and Patent Reference 2. The connecting structure disclosed in Patent Reference 1 is a structure where a pair of supply and discharge flow paths are juxtaposed each other, and liquid-tightly connected and coupled to each other by plural bolts via annular gaskets which are independent of each other. The connecting structure disclosed in Patent Reference 2 is a structure where a pair of supply and discharge flow paths are juxtaposed each other, and a single gasket having a pair of flow path holes corresponding to the pair of supply and discharge flow paths is connected and coupled by using a single external screw nut.

Both of the connecting structures disclosed in Patent References 1 and 2 employ a structure in which many fluid apparatuses are integrately attached to a fluid block, or a so-called integrated piping structure. This is useful for compactifying or modularizing the whole of a piping system.
Patent Reference 1: Japanese Patent Application Laying-Open No. 2001-82609
Patent Reference 2: Japanese Patent Application Laying-Open No. 10-169859

### Disclosure of the Invention

### Problems to be Solved by the Invention

In the connecting structures disclosed in Patent References 1 and 2, a pair of flange portions between which a gasket is interposed are caused to exhibit an effective sealing performance by fastening bolts until a predetermined surface pressure is attained. However, it is inevitable that the fastening force of the bolts is reduced with time. In order to prevent leakage from a connecting portion due to reduction of the fastening force, i.e., torque down, therefore, further fastening must be periodically performed. In the case where sealing is performed by using a gasket, a very high fastening force is necessary. Therefore, fluid supply/discharge port portions of an integration panel or a fluid device require high strength. The case is disadvantageous also in the workability of connection and coupling.

The invention has been conducted in view of the circumstances. It is an object of the invention to improve a connecting structure for an integration panel and a fluid device in a fluid piping system, thereby providing a connecting structure for an integration panel and a fluid device in which an excellent sealing property can be held even when substantially no further fastening is performed, and the assembling workability is improved.

### Means for Solving the Problems

The invention of claim 1 is a connecting structure for an integration panel and a fluid device, wherein
when a first fluid supply/discharge port portion 1A of an integration panel 1 having the first fluid supply/discharge port portion 1A where a pipe-like fluid passage 3 or an annular fluid passage, and one or more annular fluid passages 4 are concentrically formed and opened, and a second fluid supply/discharge port portion 2A of a fluid device 2 having the second fluid supply/discharge port portion 2A where a pipe-like fluid passage 7 or an annular fluid passage, and one or more annular fluid passages 8 are concentrically formed and opened are to be communicatingly connected to each other in a state where respective ones of the plural fluid passages 3, 4, 7, 8 correspond to each other, and are sealed by plural ring-like gaskets G, G interposed between the first fluid supply/discharge port portion 1A and the second fluid supply/discharge port portion 2A,
in the first fluid supply/discharge port portion 1A and the second fluid supply/discharge port portion 2A, annular projections 21, 11, 41, 31 are formed on outer-diameter portions of the fluid passages 3, 4, 7, 8 which are opened in end faces,
the gaskets G, G are configured by flexible materials having: fluid paths W, W which are formed to allow the corresponding fluid passages 3, 4, 7, 8 of the first and second fluid supply/discharge port portions 1A, 2A to communicate with each other; and a pair of annular grooves 51, 61 which are formed on outer-diameter portions of the fluid paths W, W to be fitted respectively to the annular projections 21, 11, 41, 31 formed on the end faces of the first and second fluid supply/discharge port portions 1A, 2A,
holding means I is equipped for holding a joined state where the first fluid supply/discharge port portion 1A and the second fluid supply/discharge port portion 2A are attracted to each other via the plural gaskets G, G, and the annular projections 21, 41 of the first fluid supply/discharge port portion 1A and the annular grooves 51, 61 of one ends of the gaskets G, G, and the annular projections 11, 31 of the second fluid supply/discharge port portion 2A and the annular grooves 51, 61 of other ends of the gaskets G, G are fitted respectively to each other to form a fitting sealing portion 10, and
in the plural gaskets G, G, an intermediate gasket G in which the fluid passages exist on both inner and outer diameter sides in the joined state is formed in a state where an outer peripheral portion 55a of the gasket is a wall for forming an annular fluid path W through which the annular fluid passage 8 of the first fluid supply/discharge port portion 1A existing on the outer diameter side of the intermediate gasket G communicates with the annular fluid passage 4 of the second fluid supply/discharge port portion 2A.

The invention of claim 2 is a connecting structure for an integration panel and a fluid device, wherein
when a first fluid supply/discharge port portion 1A of an integration panel 1 having the first fluid supply/discharge port portion 1A where pipe-like fluid passages 16, 19 are opened, and a second fluid supply/discharge port portion 2A of a fluid device 2 having the second fluid supply/discharge port portion 2A where pipe-like fluid passages 17, 18 are opened are to be communicatingly connected to each other in a state where the fluid passages 16, 19, 17, 18 are sealed by a ring-like gasket G interposed between the first fluid supply/discharge port portion 1A and the second fluid supply/discharge port portion 2A,
in the first fluid supply/discharge port portion 1A and the second fluid supply/discharge port portion 2A, annular projections 11, 21 are formed on outer-diameter portions of the fluid passages 16, 19, 17, 18 which are opened in end faces,
the gasket G is configured by a flexible material having: a fluid path W which is formed to allow the corresponding fluid passages 16, 19, 17, 18 of the first and second fluid supply/discharge port portions 1A, 2A to communicate with each other; and a pair of annular grooves 51, 51 which are formed on an outer-diameter portion of the fluid path W to be fitted respectively to the annular projections 11, 21 formed on the end faces of the first and second fluid supply/discharge port portions 1A, 2A, and
holding means I is equipped for holding a joined state where the first fluid supply/discharge port portion 1A and the second fluid supply/discharge port portion 2A are attracted to each other via the gasket G, and the annular projection 11 of the first fluid supply/discharge port portion 1A and the annular groove 51 of one end of the gasket G, and the annular projections 21 of the second fluid supply/discharge port portion 2A and the annular groove 51 of another end of the gasket G are fitted respectively to each other to form a fitting sealing portion 10.

The invention of claim 3 is characterized in that, in the connecting structure for an integration panel and a fluid device set forth in claim 2, the first fluid supply/discharge port portion 1A is formed in a plural number in the integration panel 1, the second fluid supply/discharge port portion 2A is formed in the fluid device 2 in a plural number corresponding to an existing number of the first fluid supply/discharge port portions 1A, and the plural first and second fluid supply/discharge port portions 1A, 2A are configured in a same plane so as to be commumicatingly connectable to each other via the gasket G.

The invention of claim 4 is characterized in that, in the connecting structure for an integration panel and a fluid device set forth in claim 1 or 2, annular press projections 12, 13, 22, 23 are formed on the inner and outer diameter sides of the annular projections 11, 21 on the end faces of the first and second fluid supply/discharge port portions 1A, 2A, the annular press projections suppressing or blocking inner and outer peripheral wall end portions 52, 53 which are projected in an axial direction in order to form the annular groove 51 in the gasket G, from being expandingly deformed by fittings between the annular groove 51 and the annular projections 11, 21.

The invention of claim 5 is characterized in that, in the connecting structure for an integration panel and a fluid device set forth in claim 4, in the joined state, the peripheral wall end portions 52, 53 and the annular press projections 12, 13, 22, 23 are pressingly contacted with each other to form a sealing portion S2.

The invention of claim 6 is characterized in that, in the connecting structure for an integration panel and a fluid device set forth in claim 5, the annular press projections 12, 13, 22, 23 are formed on a forward-narrowed annular projection having tapered peripheral faces 12a, 13a, 22a, 23a in which a side peripheral face on a side of the annular press projections is inclined so that valley portions 14, 15, 24, 25 surrounded by the annular press projections and the annular projections 11, 21 have a forward-narrowed shape, the peripheral wall end portions 52, 53 are formed into forward-narrowed annular projections which have tapered peripheral faces 52a, 53a butting against tapered peripheral faces 12a, 13a, 22a, 23a of the annular press projections 12, 13, 22, 23, and which are enterable into the valley portions 14, 15, 24, 25, and, in the joined state, the peripheral wall end portions 52, 53 enter into the valley portions 14, 15, 24, 25 to cause the tapered peripheral faces 12a, 13a, 22a, 23a, 52a, 53a to be pressingly contacted with each other.

The invention of claim 7 is characterized in that, in the connecting structure for an integration panel and a fluid device set forth in claim 1 or 2, a section shape of the gasket G has a substantially H-like shape which is axisymmetric about both a center line Z along the direction of an axis P of the first and second fluid supply/discharge port portions 1A, 2A, and a center line X perpendicular to the center line Z.

The invention of claim 8 is characterized in that, in the connecting structure for an integration panel and a fluid device set forth in claim 1 or 2, the holding means I performs an attracting function of attracting the first fluid supply/discharge port portion 1A and the second fluid supply/discharge port portion 2A to obtain the joined state.

The invention of claim 9 is characterized in that, in the connecting structure for an integration panel and a fluid device set forth in claim 8, the holding means I has: an outward flange 9B which is formed on an end portion of at least one of the first fluid supply/discharge port portion 1A and the second fluid supply/discharge port portion 2A; a through hole 9a formed in the outward flange 9B; and a bolt 66 to be screwed through the through hole 9a with a nut portion 67 disposed in another of the first fluid supply/discharge port portion 1A and the second fluid supply/discharge port portion 2A, and
the first fluid supply/discharge port portion 1A and the second fluid supply/discharge port portion 2A are attracted to each other via the gasket G by screwing the bolt 66 with the nut portion 67 to be fastened.

The invention of claim 10 is characterized in that, in the connecting structure for an integration panel and a fluid device set forth in claim 8, the holding means I is configured by: a cylindrical nut 81 comprising an internal thread portion 81n which is screwable with an external thread portion 1n formed on an outer peripheral portion of at least one of the first fluid supply/discharge port portion 1A and the second fluid supply/discharge port portion 2A; and a split ring 82 which is fitted onto an end portion of another of the first fluid supply/discharge port portion 1A and the second fluid supply/discharge port portion 2A so as to interfere with an outward flange 9B which is formed on an end portion of the other of the first fluid supply/discharge port portion 1A and the second fluid supply/discharge port portion 2A, in the direction of an axis P of the first and second fluid supply/discharge port portions 1A, 2A,
an inward flange 83 is formed on one end portion of the cylindrical nut 81, the inward flange having an opening portion 83a which allows passage of the outward flange 9B, and which interferes with the split ring 82 in the direction of the axis P, and
the first fluid supply/discharge port portion 1A and the second fluid supply/discharge port portion 2A are attracted to each other via the gasket G by fastening the cylindrical nut 81 to the external thread portion In.

The invention of claim 11 is characterized in that, in the connecting structure for an integration panel and a fluid device set forth in claim 1 or 2, the gasket G is formed by a fluororesin.

The invention of claim 12 is characterized in that, in the connecting structure for an integration panel and a fluid device set forth in claim 1 or 2, the first and second fluid supply/discharge port portions 1A, 2A are formed by a fluororesin.

### Effects of the Invention

According to the invention of claim 1, the annular projections formed respectively on the first and second fluid supply/discharge port portions, and the annular grooves formed respectively in the one and other end faces of the gaskets are fitted to each other by relative movement in the axial direction, to form fitting sealing portions. Even when the both members are slightly shifted in the axial direction, therefore, the fitting state between the annular projections and the annular grooves is held, and an excellent sealing property of blocking liquid leakage from between the first and second fluid supply/discharge port portions can continue to be performed. When this connecting structure is used in a piping system for a cleaning apparatus in a semiconductor device producing facility, for example, the occupation area of the apparatus can be reduced while ensuring an excellent sealing property, and hence the structure is advantageous from the viewpoint of cost. Furthermore, a large fluid path can be ensured, and hence the circulating flow amount can be increased, and the purities of chemicals can be made higher, thereby attaining an effect that the invention can contribute to improvement of the yield.

The holding means can hold the joined state where the fluid supply/discharge port portions are attracted to each other via the gasket. Therefore, it is possible to provide a highly reliable connecting structure for an integration panel and a fluid device by which the state where liquid leakage does not occur in the integration panel and the fluid device and the excellent sealing property can be ensured can be held for a long term. As a result, it is possible to provide a connecting structure for an integration panel and a fluid device in which an excellent sealing property can be held even when substantially no further fastening is performed, and the assembling workability is improved.

In a fitting structure in which a convex is inserted into a concave, it is generally known that, even when they are made of the same material, the convex-side member is hardly changed (compressively deformed), and the concave-side member tends to be expandingly deformed. In claim 1, therefore, the annular projections which are convex are formed on the fluid device, and the annular grooves which are concave are formed in the gaskets. Accordingly, a component which may be deformed because of occurrence of creep or aging is on the side of the gaskets which are smaller than the fluid device, and components of the fluid device are hardly deformed. Consequently, there is an effect that the advantage that an excellent sealing property can be held for a long term by replacing the gaskets can be economically realized.

According to the invention of claim 2, plural connecting structures for an integration panel and a fluid device are constructed in the same plane. As compared with the case where they are not in the same plane, therefore, the invention is advantageous because, for example, the number of component processes can be reduced, and an assembling operation can be easily conducted. Moreover, there is a further advantage that standardization of components (the first fluid supply/discharge port, the gasket, etc.) in the connecting structures, and integration (for example, the first fluid supply/discharge ports for supply and discharge are integrated by forming the pair of fluid passages into one block) are enabled, and rationalization can be performed.

The invention of claim 3 provides means for forming two or more fluid passages as concentric multiplex pipes, thereby compactifying a connecting structure portion as compared with a structure in which plural fluid passages are independently arranged. The annular projections formed respectively on the first and second fluid supply/discharge port portions, and the annular grooves formed respectively in the one and other end faces of the gasket are fitted to each other to form fitting sealing portions. Therefore, an excellent sealing property of blocking liquid leakage from between the first and second fluid supply/discharge port portions can be obtained. When this connecting structure is used in a piping system for a cleaning apparatus in a semiconductor device producing facility, for example, the occupation area of the apparatus can be reduced while ensuring an excellent sealing property, and hence the structure is advantageous from the viewpoint of cost. Furthermore, a large fluid path can be ensured, and hence the circulating flow amount can be increased, and the purities of chemicals can be made higher, thereby attaining an effect that the invention can contribute to improvement of the yield.
The holding means can hold the joined state where the fluid supply/discharge port portions are attracted to each other via the gasket. Therefore, it is possible to provide a highly reliable connecting structure for an integration panel and a fluid device by which the state where liquid leakage does not occur in the integration panel and the fluid device and the excellent sealing property can be ensured can be held for a long term.

In a fitting structure in which a convex is inserted into a concave, it is generally known that, even when they are made of the same material, the convex-side member is hardly changed (compressively deformed), and the concave-side member tends to be expandingly deformed. In claim 3, therefore, the annular projections which are convex are formed on the fluid device, and the annular grooves which are concave are formed in the gasket. Accordingly, a component which may be deformed because of occurrence of creep or aging is on the side of the gasket which is smaller than the fluid device, and components of the fluid device are hardly deformed. Consequently, there is an effect that the advantage that an excellent sealing property can be held for a long term by replacing the gasket can be economically realized. Moreover, in the intermediate gasket where the fluid passages are formed outside and inside of the gasket, not only the inner peripheral portion of the gasket, but also the outer peripheral portion functions also as a wall of a fluid path. Therefore, inner and outer fluid passages which are adjacent to each other are separated only by the thickness of the intermediate gasket, and plural fluid passages can be placed closely in a radial direction as far as possible. Accordingly, there is an advantage that the connecting structure for an integration panel and a fluid device can be further compactified. As a result, a connecting structure for an integration panel and a fluid device in which plural fluid passages are concentrically arranged and connected can be realized. Therefore, the invention can contribute to promotion of integration of fluid devices which can be advantageously modularized or compactified, and provide a connecting structure for an integration panel and a fluid device in which an excellent sealing property can be held for a long term, the reliability is high, and further compactification is enabled.

According to the invention of claim 4, there are the following effects. As described above, in concavo-convex fitting, the concave side tends to be expandingly deformed. It means that, in the invention, the inner and outer peripheral wall end portions which are formed in the gasket in order to form the annular grooves are expandingly deformed. Since the annular press projections which suppress or block expanding deformations of the peripheral wall end portions are disposed in the first and second fluid supply/discharge port portions, expanding deformations of the peripheral wall end portions are eliminated or reduced, and the annular projections and the annular grooves can be fitted together by a strong press contact force. The excellent sealing function due to the fitting between them can be exerted as desired. Moreover, the existence of the annular press projections can compensate insufficient rigidity of the peripheral wall end portions. Therefore, the thicknesses of the peripheral wall end portions of the gasket can be reduced as compared with the case where the expansion restricting portions are not disposed. Consequently, there are further advantages that the width of the gasket can be reduced, whereby the whole diameter of the fluid passage can be compactified, or namely the connecting structure for an integration panel and a fluid device can be compactified (claim 2), and that the whole diameter of plural fluid passages which are concentrically arranged can be compactified, or namely the connecting structure for an integration panel and a fluid device can be further compactified (claim 1).

According to the invention of claim 5, in the joined state, the sealing portions due to press contacts between the annular projections of the first and second fluid supply/discharge port portions, and the annular grooves of the one and other end faces of the gaskets are formed. Therefore, it is possible to configure a connecting structure for an integration panel and a fluid device in which the fitting sealing portions having an excellent sealing property are configured, and which exhibits an excellent sealing performance.

According to the invention of claim 6, there is the configuration where, in the joined state, the tapered peripheral faces of the first and second fluid supply/discharge port portions, and the tapered peripheral face of the gasket are pressingly contacted with each other in the inner and outer diameter sides of the fitting portions between the annular projections of the first and second fluid supply/discharge port portions and the annular grooves of the one or other end faces of the gaskets. Because of the butting contacts of the tapered peripheral faces, it is possible to attain the both effects of compactification of the connecting structure portion (claim 4) and improvement of the sealing property (claim 5). Since the structure in which the tapered peripheral faces butt against each other is employed, moreover, the press contact force is more increased as the integration panel and the fluid device are further strongly pressed against the gasket, thereby producing an advantage that the effects of compactification and improvement of the sealing property can be further enhanced. Accordingly, it is possible to provide a connecting structure where liquid stagnation does not occur between the tapered peripheral faces.

According to the invention of claim 7, the gasket is formed into a substantially H-like section which is vertically and laterally axisymmetric. Therefore, the design and production of the gasket and the first and second fluid supply/discharge port portions which are portions to be fitted to the gasket can be simplified as compared with the case of, for example, an asymmetric shape. Furthermore, a connecting structure which is excellent in balance (strength balance, assembling balance) when fitted to an integration panel and a fluid device can be produced.

According to the invention of claim 8, the holding means can perform not only holding of the joined state of the first fluid supply/discharge port portion and the second fluid supply/discharge port portion, but also an attracting function of attracting the first fluid supply/discharge port portion and the second fluid supply/discharge port portion to obtain the joined state. Therefore, it is not required to additionally prepare attracting means, and there are advantages that the assembling work can be reduced as a whole, and that the cost can be lowered.

According to the invention of claim 9, when an outward flange having a hole is formed in at least one of the fluid supply/discharge port portions, attraction and holding of the fluid supply/discharge port portions can be performed by simple means in which only the bolt to be passed through the hole, and the nut portion to be disposed in a fluid supply/discharge port portion of a counter device are disposed. Although the holding means having the attracting function is simple in structure and economical, it is possible to obtain a connecting structure for an integration panel and a fluid device having various advantages.

According to the invention of claim 10, the holding means having the attracting function in which, by a simple operation where the cylindrical nut that is engaged via the split ring with the outward flange formed on the end portion of one of the first and second fluid supply/discharge port portions is screwingly advanced onto the external thread portion of the other of the first and second fluid supply/discharge port portions, the annular projections of the first and second fluid supply/discharge port portions are fitted into the annular groove of the gasket so that the integration panel and the fluid device are communicatingly connected to each other in a sealed state, and the connection state can be held simply by stopping the screw advancement, and which is convenient and easy to handle is obtained as rational means that is compact and takes up little space.

The cylindrical nut can be freely out-fittingly attached to and separated from the end portion of the first fluid supply/discharge port portion or the second fluid supply/discharge port portion, and, in the out-fittingly attached state, interferes in the axial direction with both the outward flange and the split ring. While enabling direct connection of the first and second fluid supply/discharge port portions by the cylindrical nut, therefore, the split ring and the cylindrical nut are lately attachable to first or second fluid supply/discharge port portion. Accordingly, while employing economical and rational means having a reduced number of components including the cylindrical nut and the split ring, an operation of connecting the integration panel and the fluid device can be performed easily and conveniently by using the cylindrical nut without using complicated production means in which the cylindrical nut is out-fittingly attached to a fluid supply/discharge port portion in production of a first or second fluid device.

According to the invention of claim 11 or 12, the gasket and the fluid supply/discharge ports are formed by a fluororesin which is excellent in chemical resistance and heat resistance. Even when the fluid is medical solution or, chemical liquid, or high in temperature, therefore, a situation where the pipe-joint structure portion is deformed and the fluid easily leaks does not occur, and the excellent sealing property can be maintained. A fluororesin is a resinoid material obtained by polymerization of ethylene and its derivative in which one or more hydrogen atoms are substituted with fluorine atoms, and is stable at a high temperature and excellent in water repellency. Furthermore, a fluororesin is preferable in low coefficient of friction, high chemical resistance, and high electrical insulating property.

### Brief Description of the Drawings

[Fig. 1] Fig. 1 is a section view showing a concentric multiplex flow path connecting structure for an integration panel and a valve (Embodiment 1).
[Fig. 2] Fig. 2 is a section view of main portions of a gasket which is used in the connecting structure of Fig. 1, and fluid supply/discharge ports.
[Fig. 3] Fig. 3 is an enlarged section view of main portions showing in detail a fitting structure for the gasket and a fluid device.
[Fig. 4] Fig. 4 is a section view showing a concentric multiplex flow path connecting structure for an integration panel and a pump via a flanged pipe (Embodiment 2).
[Fig. 5] Fig. 5 is a section view of main portions showing a first other structure of holding means (Embodiment 3).
[Fig. 6] Fig. 6 is a diagram showing a connection procedure of a connecting structure having the holding means of Fig. 4.
[Fig. 7] Fig. 7 is a section view of main portions showing a second other structure of the holding means (Embodiment 4).
[Fig. 8] Fig. 8 is a diagram showing a connection procedure of a connecting structure having the holding means of Fig. 6.
[Fig. 9] Fig. 9 is a section view of main portions showing a third other structure of the holding means (Embodiment 5).
[Fig. 10] Figs. 10 (a) and 10 (b) are section views of main portions showing another fitting structure for a fluid device and a gasket.
[Fig. 11] Figs. 11 (a) and 11 (b) are section views of main portions showing another fitting structure for a fluid device and a second gasket.
[Fig. 12] Figs. 12(a) and 12(b) are section views of main portions showing another fitting structure for a fluid device and a first gasket.
[Fig. 13] Fig. 13 is a section view showing a connecting structure for an integration panel and a valve (Embodiment 6).
[Fig. 14] Fig. 14 is a section view of main portions of a gasket which is used in the connecting structure of Fig. 13, and fluid supply/discharge ports.
[Fig. 15] Fig. 15 is an enlarged section view of main portions showing in detail a fitting structure for a gasket and a fluid device.
[Fig. 16] Fig. 16 is a section view showing a connecting structure for an integration panel and a bellows valve (Embodiment 7).
[Fig. 17] Fig. 17 is a section view showing a connecting structure for an integration panel and a filter (Embodiment 8).
[Fig. 18] Fig. 18 is a section view of main portions showing a case where the holding means of the first other structure is applied to a single-flow path connecting structure (Embodiment 9).
[Fig. 19] Fig. 19 is a diagram showing a connection procedure of a connecting structure having the holding means of Fig. 18.
[Fig. 20] Fig. 20 is a section view of main portions showing a fourth other structure of the holding means (Embodiment 10).
[Fig. 21] Fig. 21 is a section view of main portions showing a fifth other structure of the holding means (Embodiment 11).

### Description of Reference Numerals

- 1: integration panel
- 1A: first fluid supply/discharge port portion
- In: external thread portion
- 2: fluid device
- 2A: second fluid supply/discharge port portion
- 3, 7: pipe-like fluid passage
- 4, 8: annular fluid passage
- 9a: through hole
- 9B: outward flange
- 10: fitting sealing portion
- 11, 21: annular projection
- 12, 13, 22, 23: annular press projection
- 12a, 13a, 22a, 23a: tapered peripheral face
- 14, 15, 24, 25: valley portion
- 16, 19: fluid passage of integration panel
- 17, 18: fluid passage of fluid device
- 51: annular groove
- 52, 53: peripheral wall end portion
- 52a, 53a: tapered peripheral face
- 66: bolt
- 67: nut portion
- 81: cylindrical nut
- 81n: internal thread portion
- 82: split ring
- 83: inward flange
- 83a: opening portion
- G: gasket
- I: holding means
- P: axis
- S2: sealing portion
- W: fluid path
- X: center line perpendicular to center line
- Z: center line along axial direction

### Best Mode for Carrying Out the Invention

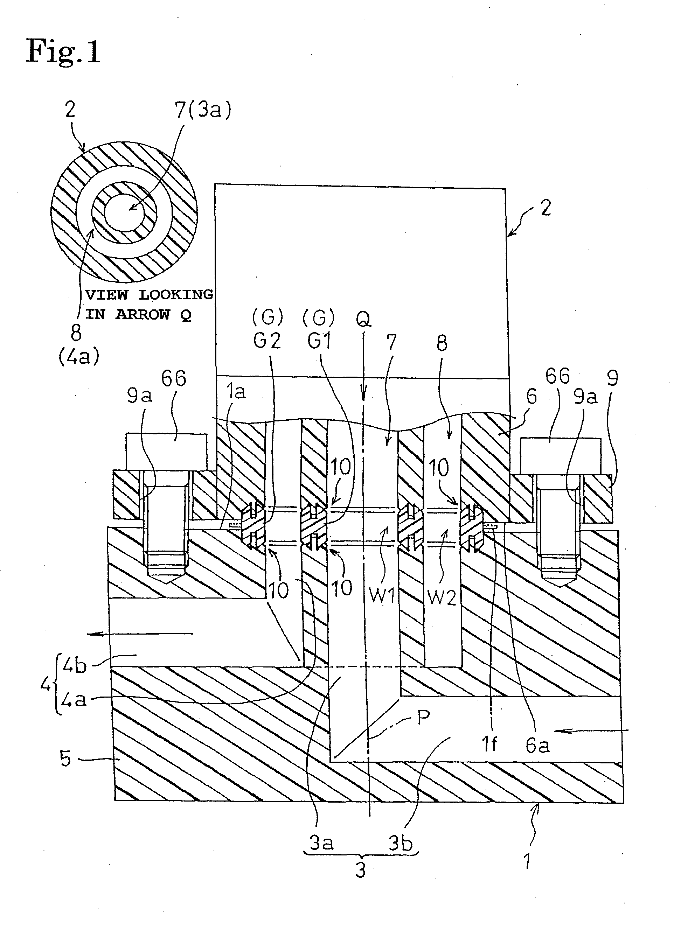

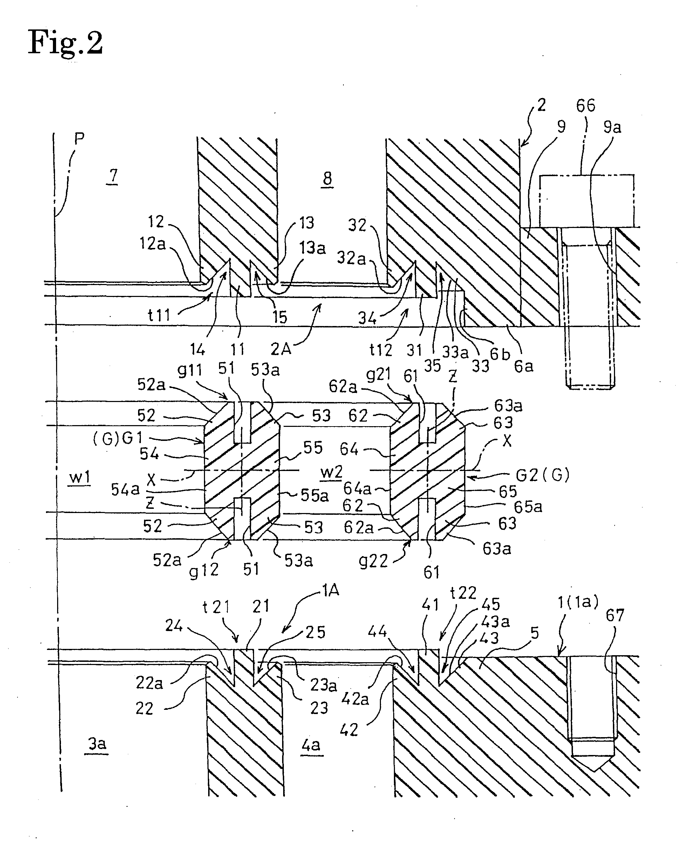

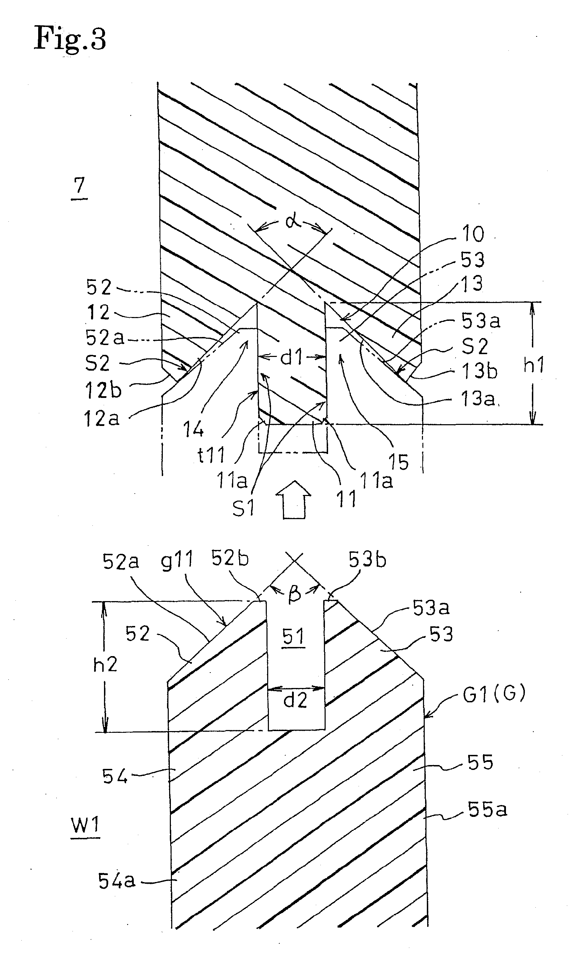

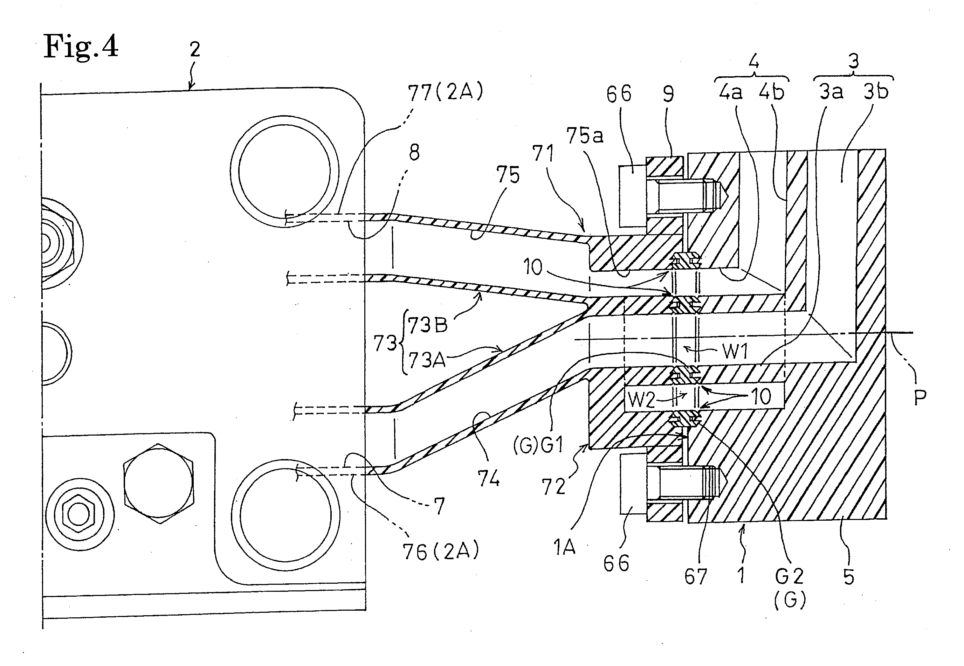

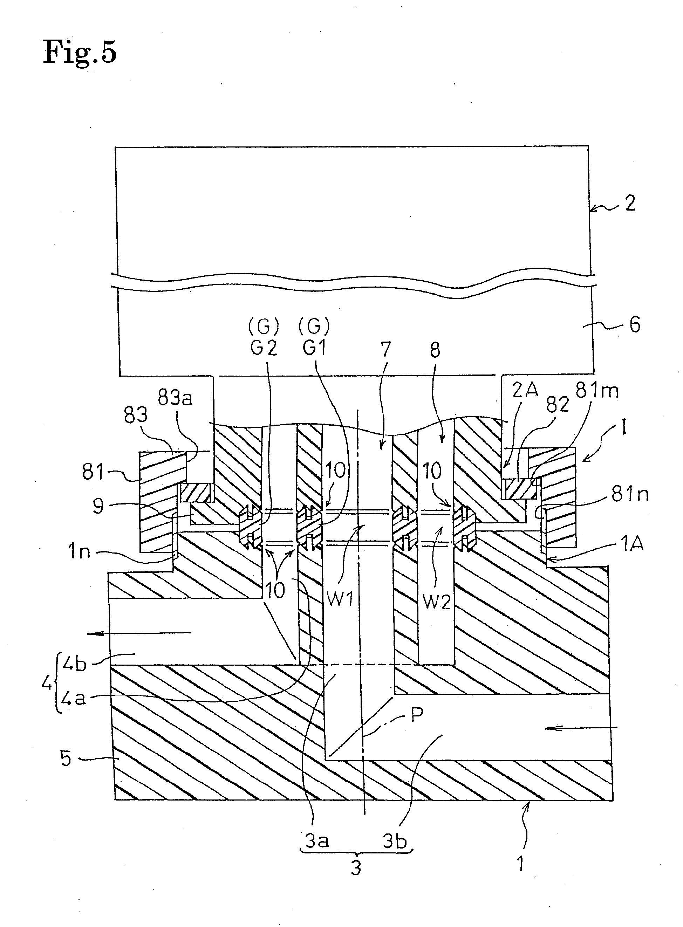

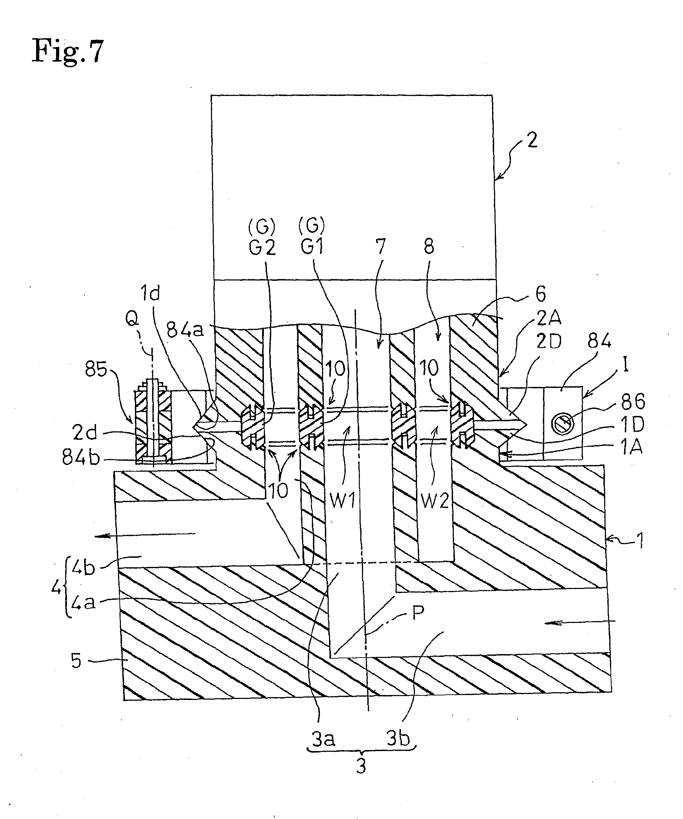

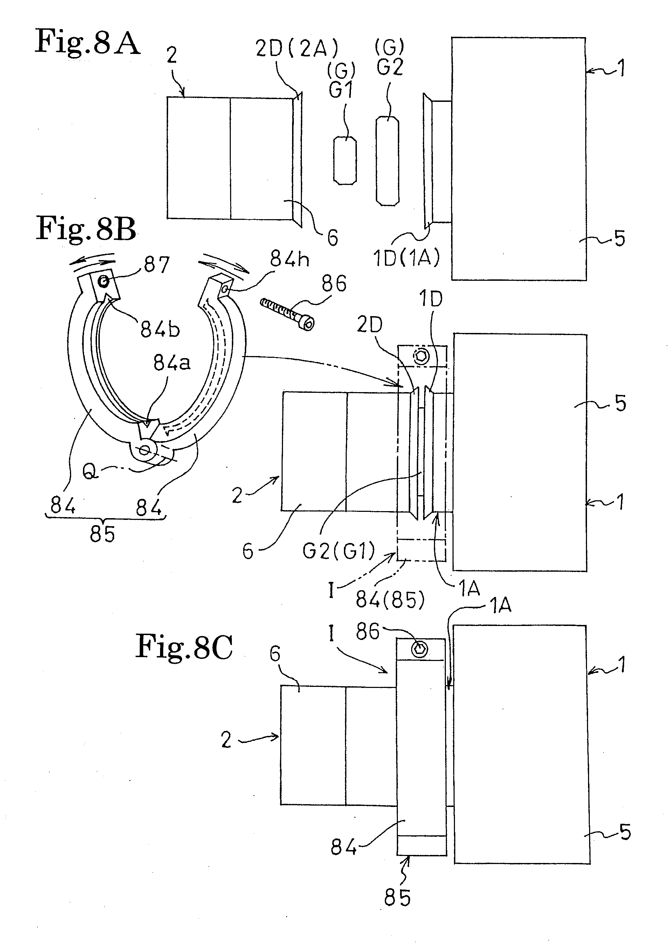

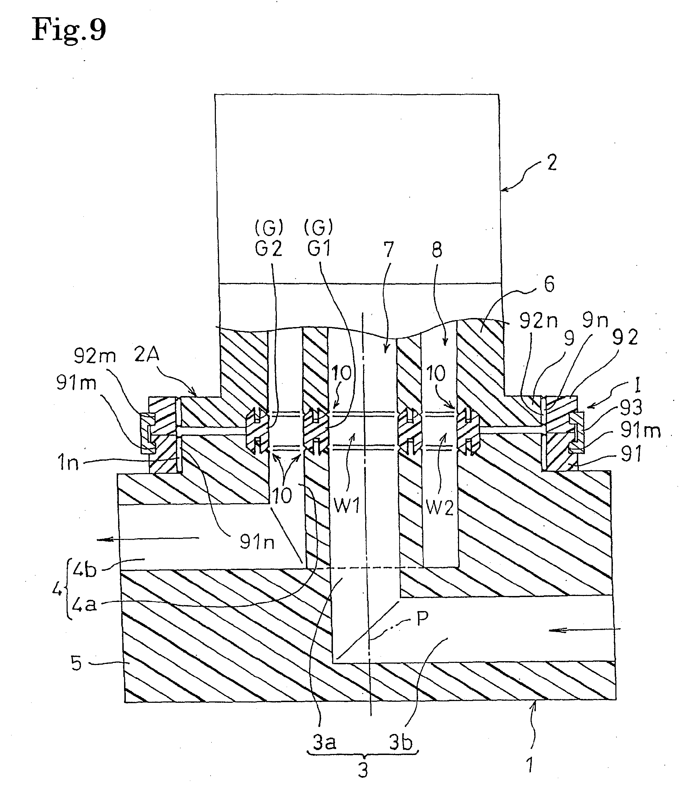

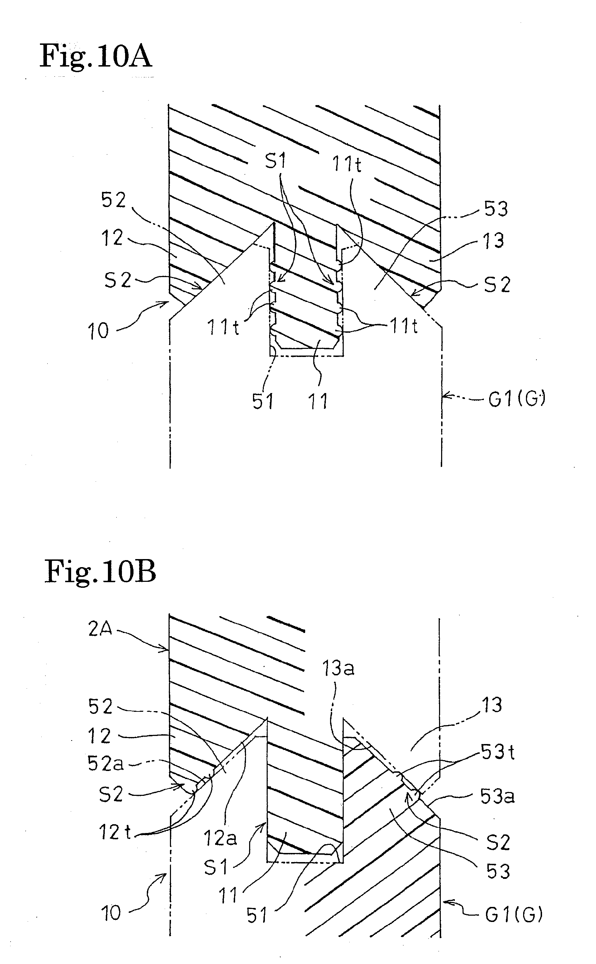

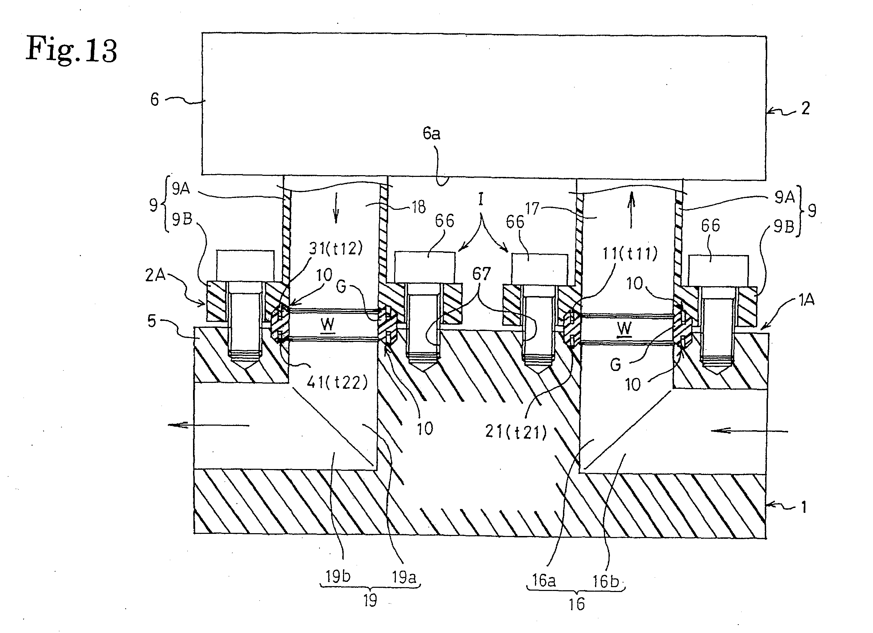

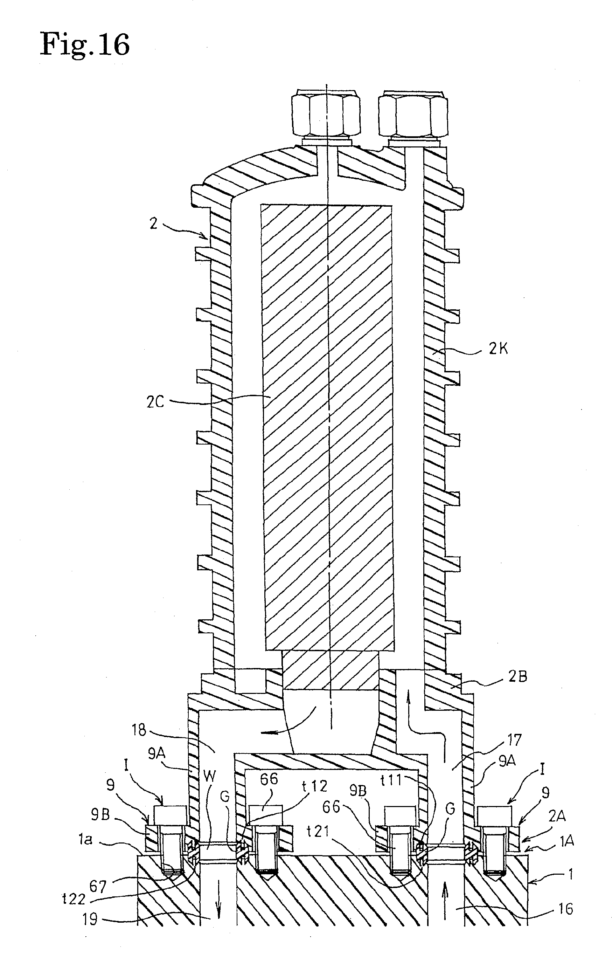

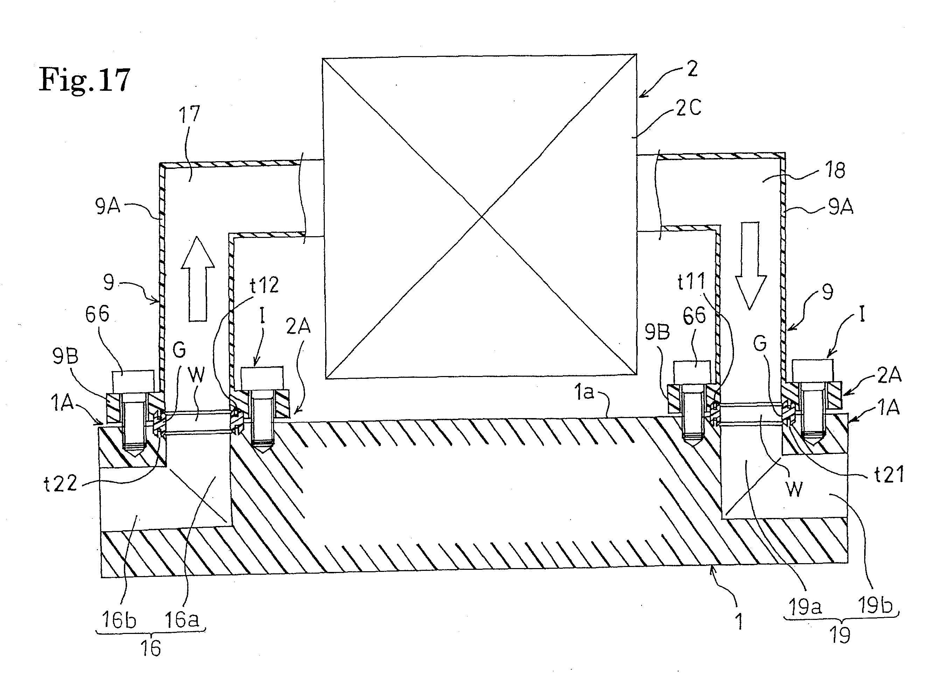

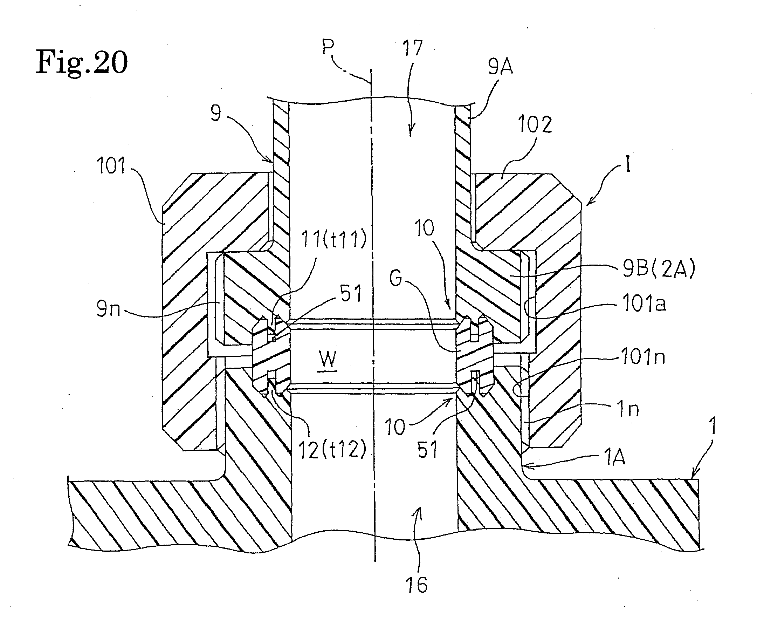

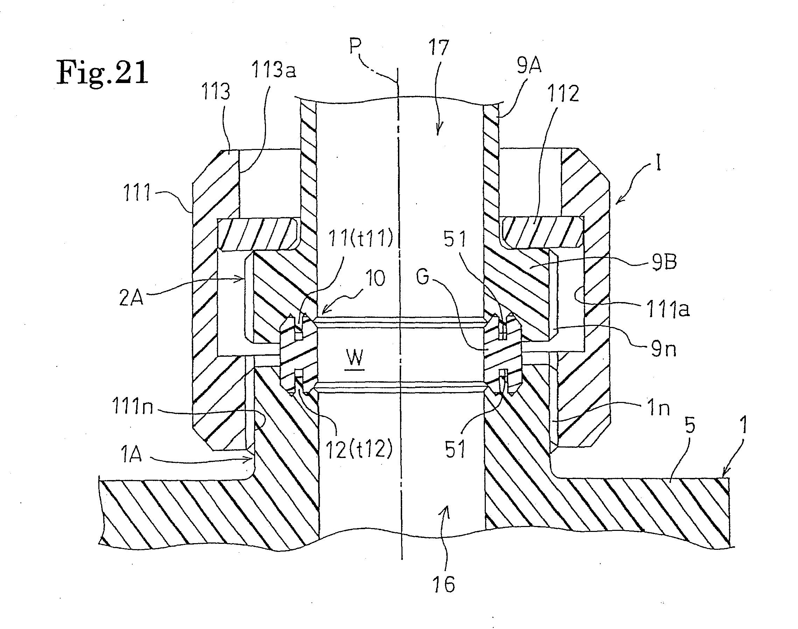

Hereinafter, embodiments of the connecting structure for an integration panel and a fluid device of the invention will be described with reference to the drawings. Figs. 1 and 2 are overall and section views of main portions showing the connecting structure for an integration panel and a fluid device in Embodiment 1, Fig. 3 is a section view of main portions showing in detail a fitting structure for a first gasket and a first fluid supply/discharge port portion, Fig. 4 is an overall view showing a connecting structure for an integration panel and a fluid device in Embodiment 2, Figs. 5, 6, 18, and 19 are half-section and assembly views of holding means of a first other structure, Figs. 7 and 8 are half-section and assembly views of holding means of a second other structure, Fig. 9 is a section view of holding means of a third other structure, Figs. 10 to 12 are section views of main portions showing various other fitting structures for a fluid device and a gasket, Figs. 13 to 15 show a connecting structure for an integration panel and a fluid device according to Embodiment 3, Figs. 16 and 17 show connecting structures for an integration panel and a fluid device according to Embodiments 4 and 5, respectively, Fig. 20 is a section view showing a fourth other structure of the holding means, and Fig. 21 is a section view showing a fifth other structure of the holding means.

### [Embodiment 1]

Figs. 1 and 2 show a connecting structure for an integration panel and a fluid device according to Embodiment 1. The connecting structure for an integration panel and a fluid device is a concentric double flow path structure that extends over both an integration panel 1 in which plural pipe-like fluid passages 3, 4 are formed, and a valve (such as an on-off valve or a stop valve) 2 which is mounted on the upper face 1a of the panel via inner and outer ring-like gaskets G, G numbering two in total, and that shares the vertical axis P.

In the integration panel 1, as shown in Figs. 1 and 2, the pipe-like supply-side fluid passage 3 consisting of: a vertical passage 3a which is vertically formed, and which is opened in the panel upper face 1a; and a lateral passage 3b which laterally extends, and the discharge-side fluid passage 4 consisting of: an annular vertical ring passage 4a which is formed on an outer diameter-side of the vertical passage 3a, and which is opened in the panel upper face 1a; and a lateral passage 4b which communicates with a bottom portion of the ring passage, and which laterally extends are formed in a panel member (or a block member) 5 made of a fluororesin such as PFA or PTFE. The portion where the supply/discharge fluid passages 3, 4 in the integration panel 1 are opened in a double-pipe like manner is referred to as a first fluid supply/discharge port portion 1A. In the first fluid supply/discharge port portion 1A, the pipe-like vertical passage 3a and the annular vertical ring passage 4a are formed as concentric passages having the common axis P. In the first fluid supply/discharge port portion 1A, a lower first seal end portion t21 and lower second seal end portion t22 which have inner and outer annular projections 21, 41 that are annular and centered at the axis P, and that are upward projected are formed in the outer diameter-side portions of the fluid passages 3, 4 which are opened in the upper end face of the port portion, respectively.

As shown in Figs. 1 and 2, the valve (an example of the fluid device) 2 has a valve case 6 which is made of a fluororesin such as PFA or PTFE, and which is circular in a vertical view. A lower end portion of the valve case 6 is formed as a second fluid supply/discharge port portion 2A having: a pipe-like supply-side fluid passage 7 which is vertically placed at the center of the lower end portion in a state where it is opened in the lower face 6a; and an annular discharge-side fluid passage 8 which is formed on the outer-diameter side of the supply-side fluid passage 7, and which is vertically placed in a state where it is opened in the lower face 6a. In the second fluid supply/discharge port portion 2A, namely, the pipe-like supply-side fluid passage 7 and the annular discharge-side fluid passage 8 are formed as concentric passages having the common axis P. A mounting flange 9 which has a pair of bolt insertion holes 9a, and which is made of a fluororesin such as PFA or PTFE is integrated by fusion bonding to an outer peripheral portion of the lower end of the valve case 6. Alternatively, the valve case 6 and the mounting flange 9 are formed as an integral member which is integrally formed by a cutting or molding process. In the second fluid supply/discharge port portion 2A, an upper first seal end portion t11 and upper second seal end portion t12 which have inner and outer annular projections 11, 31 that are annular and centered at the axis P, and that are upward projected are formed in the outer diameter-side portions of the fluid passages 7, 8 which are opened in the lower end face of the port portion, respectively.

The inner and outer ring-like gaskets G, G are different only in diameter, and formed into the same section shape. Their structures will be described while taking the inner first gasket G1 (an example of the gaskets G) as an example. In the outer second gasket G2 (an example of the gaskets G) the description of which is omitted, portions corresponding to those of the first gasket G1 are denoted by corresponding reference numerals (for example, 54a → 64a). The first gasket G1 is configured as a portion made of a fluororesin such as PFA or PTFE, and having: a pipe-like fluid path W1 (in the second gasket G2, an annular fluid path W2) which is formed so as to allow the vertical passage 3a and supply-side fluid passage 7 that are corresponding fluid passages of the first and second fluid supply/discharge port portions 1A, 2A, to communicate with each other; and a pair of upper and lower annular grooves 51, 51 which are formed in an outer diameter-side portion of the fluid path W1 so as to be fitted respectively with the annular projections 11, 31 of the upper first seal end portion t11 and upper second seal end portion t12 that are formed on the end faces of the first and second fluid supply/discharge port portions 1A, 2A.

Namely, the section shape of the first gasket G1 is formed into a substantially H-like shape which has the pair of upper and lower annular grooves 51, 51, and inner and outer peripheral walls 54, 55 for forming the annular grooves 51, 51, in which the upper and lower annular grooves 51, 51 have the same depth and width, and are vertically symmetric, and the inner and outer peripheral walls 54, 55 are laterally symmetric, and which is axisymmetric (or approximately axisymmetric) about both the vertical center line Z along the direction of the axis P of the first and second fluid supply/discharge port portions 1A, 2A, and the lateral center line X perpendicular to the vertical center line Z. Upper and lower end portions of the inner peripheral wall 54 are formed as tapered inner peripheral faces 52a, 52a in which upper and lower end portions of the fluid path W1 serving as the inner peripheral face 54a are outward inclined in a funnel-like manner. Also upper and lower end portions of the outer peripheral wall 55 are formed as tapered outer peripheral faces 53a, 53a in which upper and lower end portions of the outer peripheral face 55a are inward inclined.

On the inner- and outer-diameter sides of the annular projections 21, 41 of the lower first and lower second seal end portions t21, t22 of the first fluid supply/discharge port portion 1A of the integration panel 1, and the annular projections 11, 31 of the upper first and upper second seal end portions t11, t12 of the second fluid supply/discharge port portion 2A of the valve 2, annular press projections 12, 13, 22, 23, 32, 33, 42, 43 are formed to prevent inner and outer peripheral wall end portions 52, 53, 62, 63 which are projected in the direction of the axis P in order to form the annular grooves 51, 61 in the gaskets G1, G2, from being expandingly deformed by fittings between the corresponding annular grooves 51, 61 and the corresponding annular projections 11, 21, 31, 41.

The structure relating to the annular press projections will be described about the first gasket G1 and the upper first seal end portion t11. The inner and outer annular press projections 12, 13 are symmetric, and formed as annular projections that have a forward-narrowed shape, and that have a tapered outer peripheral face 12a and a tapered inner peripheral face 13a in which side peripheral faces on the side of the annular projections are inclined so that valley portions 14, 15 surrounded by the projections and the annular projection 11 have an inward-narrowed shape (upward narrowed shape). Namely, the upper first seal end portion t11 is a generic term of the annular projection 11, and the annular press projections 12, 13 and valley portions 14, 15 which are formed on the both of inner and outer sides of the annular projection.

Upper end portions of the inner and outer peripheral walls 54, 55 of the first gasket G1 have annular seal projections (an example of the peripheral wall end portions) 52, 53 which are forward-narrowed, which have tapered inner and tapered outer peripheral faces 52a, 53a butting against the tapered outer and tapered inner peripheral faces 12a, 13a of the annular press projections 12, 13, respectively, and which are fittable into 14, 15. In a joined state (see Fig. 1), the annular seal projections 52, 53 which are upper end peripheral wall portions of the inner and outer peripheral walls 54, 55 enter into the corresponding valley portions 14, 15, the tapered outer peripheral face 12a of the upper first seal end portion t1 is pressingly contacted with the tapered inner peripheral face 52a of the first gasket G1, and the tapered inner peripheral face 13a of the upper first seal end portion t11 is pressingly contacted with the tapered outer peripheral face 53a of the first gasket G1.

Namely, an upper sealing portion g11 is formed by the annular groove 51 and the annular seal projections 52, 53 inside and outside thereof, in the upper end portion of the first gasket G1, and similarly a lower sealing portion g12 is formed in the lower end portion. The upper sealing portion g11 is fitted to the upper first seal end portion t11 to form a fitting sealing portion 10, and the lower sealing portion g12 is fitted to the lower second seal end portion t21 to form a fitting sealing portion 10. Also in the second gasket, similarly, an upper sealing portion g21 and a lower sealing portion g22 are formed, and fitted to the upper second seal end portion t12 and the lower second seal end portion t22 to form fitting sealing portions 10, respectively.

The fitting structure of the fitting sealing portions 10 will be described in detail about the upper first seal end portion t11 and the upper sealing portion g11 of the first gasket G1. As shown in Figs. 2 and 3, the inner and outer valley portions 14, 15 are symmetric, and the inner and outer annular seal projections 52, 53 are symmetric. The contained angle α° of the whole of the inner and outer valley portions 14, 15, and the opposed angle β° of the whole of the inner and outer annular seal projections 52, 53 are set to have the relationship of α° < β°. Preferably, the angles are set to have the relationship of α° + (5 to 15°) = β°. According to the configuration, in the joined state (described later) in which the upper annular projection 11 of the upper first seal end portion t11 is fitted to the annular groove 51, the tapered outer peripheral face 12a of the upper inner annular press projection 12, and the tapered inner peripheral face 52a of the upper inner annular seal projection 52 are in a state where they are pressingly contacted with each other in the innermost diameter portion (see the phantom line in Fig. 3), thereby attaining an advantage that they function as a secondary sealing portion S2 which prevents the fluid passing through the fluid passage W1 from entering between the tapered outer and tapered inner peripheral faces 12a, 52a.

Between the width d1 of the upper annular projection 11 and the width d2 of the upper annular groove 51, a relationship of d1 > d2 is established. Preferably, the widths are set to have the relationship of d1 x (0.75 to 0.85) = d2. Between the projection length h1 of the upper annular projection 11 and the depth h2 of the upper annular groove 51, a relationship of h1 < h2 is established. According to the configuration, the upper annular projection 11 and the upper annular groove 51, more specifically, the both inner and outer side peripheral faces of the upper annular projection 11, and the corresponding inner and outer side peripheral faces of the upper annular groove 51 are strongly pressingly contacted with each other to form a primary sealing portion S1 which exhibits an excellent sealing performance of preventing the fluid from leaking. Moreover, the tapered outer peripheral face 12a of the upper inner annular press projection 12 surely butts against the tapered inner peripheral face 52a of the upper inner annular seal projection 52. Accordingly, there is an advantage that the above-mentioned secondary sealing portion S2 is satisfactorily formed.

The tip ends of the annular press projections 12, 13 and the annular seal projections 52, 53 are formed into a shape which is cut so as not to form a pin angle, i.e., into inclined cut faces 12b, 13b and cut faces 52b, 53b. According to the configuration, even when the tip end of the upper inner annular press projection 12 is slightly expandingly deformed toward the fluid passage W1, only a recess having a triangular section shape which is largely opened is formed in the middle of the fluid passage W1 because they have originally such a cut shape. The fluid existing in the recess easily flows out, and liquid stagnation is substantially prevented from being produced. Moreover, the opening angle of the recess, i.e., the contained angle between the inclined cut face 12b and the tapered inner peripheral face 52a is sufficiently large, and hence the possibility that liquid stagnation due to surface tension is caused is eliminated. The internal and external angles of the tip end of the annular projection 11 are formed as a chamfered shape 11a. Therefore, the press movement into the narrow annular groove 51 can be smoothly performed without causing any problem such as scuffing.

The above-described structure of the fitting sealing portion 10 is similarly applied to the lower side of the first gasket G1, and also to the second gasket G2, and corresponding portions are denoted by corresponding reference numerals. In the second gasket G2, the diameter is different, but the section shape is strictly identical with that of the first gasket G1. However, the shapes of the upper and lower second seal end portions t12, t22 of the first and second fluid supply/discharge port portions 1A, 2A are slightly different from those of the upper and lower first seal end portions t11, t21 because no fluid passage exists on the outer peripheral side.

In the upper second seal end portion t12, namely, a lower-end inner peripheral portion 6b for forming a lower end portion of the valve case 6 exists in a state where it is continuous to a tapered inner peripheral face 33a of the annular press projection 33. The lower-end inner peripheral portion 6b serves as a guide in the case where the upper sealing portion g21 of the second gasket G2 is fitted to the upper second seal end portion t₁₂, and can perform a function of cooperating with the tapered inner peripheral face 33a to prevent an outer peripheral wall 65 of the second gasket G2 from being expandingly deformed. In the lower second seal end portion t22, the panel member 5 continuously exists on the outer periphery side of the outer annular press projection 43. The effect that, when the lower sealing portion g22 is fitted to the lower second seal end portion t22, the expanding deformation of the outer peripheral wall end portion 63 of the lower sealing portion g22 of the second gasket G2 is blocked by the tapered inner peripheral face 43a is enhanced.

By contrast, in the first and second gaskets G1, G2, the first gasket G1 that is an intermediate gasket in which the fluid passages 7, 8 exist on both the inner and outer diameter sides in the joined state is formed in a state where the outer peripheral face 55a which is an outer peripheral portion of the first gasket is a wall for forming an annular fluid path W2 through which the annular fluid passage 4a of the first fluid supply/discharge port portion 1A existing on the outer-diameter side of the first gasket G1 communicates with the annular fluid passage 8 of the second fluid supply/discharge port portion 2A. When it is configured so that both the inner and outer peripheral face 54a, 55a of the first gasket G1 function also as the walls for forming the fluid passages W1, W2, a relationship of "thickness of first gasket G1" = "distance between annular fluid passages 3a, 7 and pipe-like fluid passages 4a, 8" is attained, and it is possible to further compactify the connecting portion between the first and second fluid supply/discharge port portions 1A, 2A. As indicated by the phantom lines in Fig. 1, a ring-like flange 1f for attachment and detachment which is laterally projected may be integrally formed on the outer peripheral wall 65 of the second gasket G2. In this configuration, there is an advantage that, when the second gasket G2 is to be pulled out from the first or second fluid supply/discharge port portion 1A, 2A, the pulling operation can be easily performed by, for example, pulling the flange 1f by a tool or the fingers. In this case, the thickness of the attachable and detachable flange 1f is smaller than the distance between the first and second fluid supply/discharge port portions 1A, 2A in the joined state.

Next, holding means I will be described. As shown in Figs. 2 and 3, the holding means I is configured so that the first fluid supply/discharge port portion 1A of the integration panel 1 and the second fluid supply/discharge port portion 2A of the valve 2 are attracted to each other via the first and second gaskets G1, G2, and the attracting function holds the joined state where the upper first and upper second seal end portions t11, t12 of the first fluid supply/discharge port portion 1A and the upper sealing portions g11, g21 of the first and second gaskets G1, G2, and the lower first and lower second seal end portions t21, t22 of the second fluid supply/discharge port portion 2A and the lower sealing portions g12, g22 of the first and second gaskets G1, G2 are fitted to each other to form the fitting sealing portions 10. Namely, the annular projections 11, 31 of the second fluid supply/discharge port portion 2A are fitted into the upper annular grooves 51, 61 of the first and second gaskets G1, G2, and the annular projections 21, 41 of the first fluid supply/discharge port portion 1A are fitted into the lower annular grooves 51, 61 of the first and second gaskets G1, G2.

The specific structure of the holding means I is configured by: a pair of bolts 66 which are passed through bolt passage holes 9a of the mounting flange 9 of the second fluid supply/discharge port portion 2A; and nut portions 67, 67 which are formed correspondingly with the pair of bolt passage holes 9a, 9a in the first fluid supply/discharge port portion 1A (the panel member 5). By a fastening operation of screwing the bolts 66 with the nut portions 67, the valve 2 can be attracted to the integration panel 1, and the attracted state can be held. In the case where the press contact forces of the fitting sealing portions 10 are reduced because of aging, occurrence of creep, or the like, the reduction can be coped with by further fastening the bolts 66, and therefore the excellent sealing property can be held.

### [Embodiment 2]

As shown in Fig. 4, a connecting structure for an integration panel and a fluid device according to Embodiment 2 is used for communicatingly connecting the integration panel 1 to a pump (such as a bellows pump for a circulation line of a high-temperature cleaning apparatus) 2 which is an example of a fluid device, via a flanged pipe 71. The configuration of the connecting structure itself in which the inner and outer or first gasket G1 (an example of the gasket G) and second gasket G2 (an example of the gasket G) are interposed is identical with that of the connecting structure described in Embodiment 1. Therefore, only principal components are denoted by reference numerals, and the detailed description of the configuration is omitted.

The integration panel 1 is basically identical in structure except that the direction of the discharge-side fluid passage 4 is opposite to that in the case of the integration panel 1 of Embodiment 1. In the configuration of Embodiment 1, however, the connecting structure for the integration panel and the fluid device is configured on the upper face of the integration panel. By contrast, the connecting structure of Embodiment 2 is configured on a side face of the integration panel 1. The supply/discharge fluid passages 7, 8 of the pump 2 are opened in the side face. In the integration panel 1, the pair of fluid passages 3, 4 have the double-pipe structure. By contrast, the fluid passages are of the independent type in which they are vertically arranged.

The flanged pipe 71 consists of: a flange portion 72 having the above-described mounting flange 9; and a substantially bifurcated pipe portion 73 which is continuous to the flange portion. The pipe portion 73 is configured by a supply-side pipe 73A having a pipe-like supply-side fluid passage 74, and a discharge-side fluid passage 73B having a pipe-like discharge-side fluid passage 75. In the flange portion 72, the supply-side fluid passage 74 is formed into a pipe-like shape centered at the axis P, and opened while being directly opposed to the vertical passage 3a of the integration panel 1, and an annular passage portion 75a which is opened while being directly opposed to the vertical ring passage 4a of the integration panel 1 is formed in a state where it is continuous to the discharge-side fluid passage 75. The fluid passages 74, 75 are communicatingly connected and coupled to an in-side port 76 and out-side port 77 of the pump 2 by means such as fusion bonding.

As described above, the flanged pipe 71 having the flange portion 72 of the double-pipe structure, and the two independent pipe portions 73 is used. Therefore, the first fluid supply/discharge port portion 1A of the double-pipe structure in the integration panel 1, and the second fluid supply/discharge port portion 2A configured by the pair of in-side and out-side ports 76, 77 which are arranged in parallel, i.e., the integration panel 1 and the pump 2 can be communicatingly connected to each other in juxtaposed, unforced, and compact manners, although the fluid passages have the different opening structures.

### [Embodiment 3]

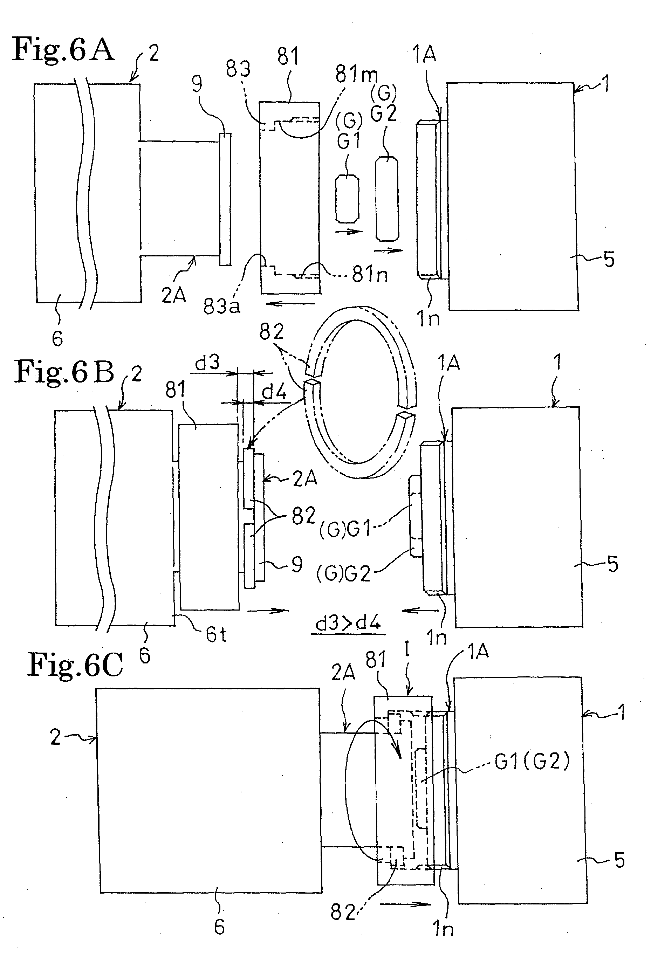

Figs. 5 and 6 show a connecting structure for an integration panel and a fluid device according to Embodiment 3. The connecting structure is different only in the holding means I from that of Embodiment 1. The holding means I of a first other structure will be described. In Figs. 5 and 6, portions corresponding to those of Embodiment 1 shown in Figs. 1 to 3 are denoted by corresponding reference numerals. As shown in Figs. 5 and 6, the holding means I of the first other structure is configured by: a cylindrical nut 81 having an internal thread portion 81n which is screwable with an external thread portion 1n formed on an outer peripheral portion of the projection-like first fluid supply/discharge port portion 1A that is formed on the upper face of the integration panel 1, and that is circular in a plan view; and a split ring 82 which has two or three or more split pieces, and which interferes in the direction of the axis P of the annular fluid passage 7 with the outward flange 9 that is formed in a lower end portion of the valve case 6 of the valve 2. The holding means I is configured as holding means having the attracting function in which, by a fastening operation of the cylindrical nut 81 in which the internal thread portion 81n is screwed with the external thread portion In of the first fluid supply/discharge port portion 1A, the fluid supply/discharge port portions 1A, 2A can be attracted in the direction along which they approach each other via the first gasket G1 (an example of the gasket G), and the second gasket G2 (an example of the gasket G), and the attracted state can be held.

An opening portion 83a of an inward flange 83 which is formed on the side of the valve 2 (the upper side) of the cylindrical nut 81 is set to have a minimum internal diameter which is sufficient for allowing the passage of the outward flange 9. The outer diameter of the split ring 82 is set to be slightly smaller than the inner diameter of the internal thread portion 81n so that the split ring can freely enter into the cylindrical nut 81, and the inner diameter is set to a minimum dimension by which the split ring is fittable onto the outer diameter portion of the circular second fluid supply/discharge port portion 2A of the valve 2. In this case, in order to mount the split ring 82, the axial length of a small-diameter portion of the second fluid supply/discharge port portion 2A excluding the outward flange 9 must be larger than the sum of the axial length of the cylindrical nut 81 and the thickness of the split ring 82. Specifically, the conditions that, as shown in Fig. 6(b), the conditions in which the distance d3 between the cylindrical nut 81 in a state where it butts against a root portion 6t of the valve case 6, and the outward flange 9 is larger than the thickness d4 of the split ring 82 (d3 > d4) are imposed.

Between an inner end portion of the internal thread portion 81n of the cylindrical nut 81 and the inward flange 83, an inner peripheral face portion 81m which is axially slidable on the split ring 82, and which has a length in the direction of the axis P that covers the width dimension of the split ring 82 is formed into a flat inner peripheral face which is coaxial with the axis P. Namely, the inner diameter portion 81a between the internal thread portion 81n of the cylindrical nut 81 and the inward flange 83 is formed into a flat inner peripheral face which is coaxial with the supply-side fluid passage 7, and the dimensions are set to a fitting tolerance state where the inner diameter of the inner peripheral face portion 81m is very slightly larger than the outer diameter of the split ring 82 which is formed so as to have a rectangular section shape. By contrast, an outer diameter portion of the second fluid supply/discharge port portion 2A is formed into a flat outer peripheral face which is coaxial with the supply-side fluid passage 7, and has a diameter which is substantially equal to the inner diameter of the split ring 82. According to the configuration, it is possible to eliminate disadvantages that, when the cylindrical nut 81 is screwingly advanced, the split ring 82 is inclined to gouge, and that the pressing force in the direction of the axis P due to the screw advancement of the cylindrical nut 81 is not well transmitted to the outward flange 9. Therefore, the outward flange 9 can be effectively pressed, and the first and second fluid supply/discharge port portions 1A, 2A can be satisfactorily attracted in the direction along which they approach each other.

The fluid supply/discharge port portions 1A, 2A are connected and coupled to each other by the holding means I of the first other structure in the following operation procedure. First, as shown in Fig. 6(a), the cylindrical nut 81 is passed over the outward flange 9 to be fitted onto the outer periphery of the second fluid supply/discharge port portion 2A of the valve 2, and is moved to the innermost portion (until it butts against the root portion 6t). Then, as shown in Fig. 6(b), the split ring 82 is passed between the outward flange 9 and the tip end of the cylindrical nut 81, to be fitted onto the second fluid supply/discharge port portion 2A. At or prior to this, the first and second gaskets G1, G2 may be attached to the end face of one of the fluid supply/discharge port portions 1A, 2A via provisional fittings between the annular projections 11, 21, 31, 41 and the annular grooves 51, 61. Next, the first fluid supply/discharge port portion 1A is placed on the second fluid supply/discharge port portion 2A via the gaskets G1, G2, the cylindrical nut 81 is slidingly moved under this state, and a fastening operation [see Fig. 6(c)] is then conducted, whereby the connection state shown in Fig. 5 is obtained. In Fig. 6, for the sake of convenience in drawing, the integration panel 1 and valve 2 which are vertically stacked to each other are shown in a laterally arranged manner.

### [Embodiment 4]

Figs. 7 and 8 show a connecting structure for an integration panel and a fluid device according to Embodiment 4. The connecting structure is different only in the holding means I from that of Embodiment 1. The holding means I of a second other structure will be described. In Figs. 7 and 8, portions corresponding to those of Embodiment 1 shown in Figs. 1 to 3 are denoted by corresponding reference numerals. The holding means I of the second other structure comprises: first and second truncated conical end portions 1D, 2D in which the diameters of the first and second fluid supply/discharge port portions 1A, 2A are increased as further advancing toward the respective end faces; a sprit press ring 85 consisting of a pair of half-arcuate members 84, 84 having an inner peripheral face having a substantially L-like section shape formed by a first tapered inner peripheral face 84a butting against a tapered outer peripheral face 1d of the first truncated conical end portion 1D, and a second tapered inner peripheral face 84b butting against a tapered outer peripheral face 2d of the second truncated conical end portion 2D; a bolt 86 for attracting the half-arcuate members 84, 84; and a nut 87 which is formed in one of the half-arcuate members 84.

In a state where the pair of half-arcuate members 84 stride over and cover the first truncated conical end portion 1D and the second truncated conical end portion 2D in the joined state, the fluid supply/discharge port portions 1A, 2A are attracted together by a force exerted by butting of the tapered faces caused by fastening the bolt 86 passed through a through hole 84h of the other half-arcuate member 84, and the nut 87 to attract together the half-arcuate members 84, 84 in which one end is hingedly pivoted at a fulcrum Q. The sprit press ring 85 is preferably formed by a fluororesin material. Alternatively, the ring may be made of another material such as an aluminum alloy.

The fluid supply/discharge port portions 1A, 2A are connected and coupled to each other by the holding means I of the second other structure in the following operation procedure. First, a preliminary coupling operation of lightly connecting and coupling the first and second fluid supply/discharge port portions 1A, 2A with each other via the first and second gaskets G21, G2 as shown in Fig. 8(a) is performed. Next, the sprit press ring 85 is put on the first and second truncated conical end portions 1D, 2D on which the preliminary coupling operation has been applied, and an operation of fastening the bolt 86 is performed. As a result of the fastening of the bolt 86, the gaskets G1, G2 are deeply fitted into the first and second fluid supply/discharge port portions 1A, 2A, and, as shown in Fig. 8(c), a connected and coupled state of the integration panel 1 and the valve 2 is obtained.

### [Embodiment 5]

Fig. 9 shows a connecting structure for an integration panel and a fluid device according to Embodiment 5. The connecting structure is different only in the holding means I from that of Embodiment 1. The holding means I of a third other structure will be described. In Fig. 9, portions corresponding to those of Embodiment 1 shown in Figs. 1 to 3 are denoted by corresponding reference numerals. The holding means I of the third other structure comprises: the projection-like first fluid supply/discharge port portion 1A which is formed on the upper face of the integration panel 1 in a state where the external thread portion In is formed in the outer peripheral portion, and which is circular in a plan view; the flange portion 9 which is formed on a lower end portion of the valve case 6 in a state where an external thread portion 9n is formed in the outer peripheral portion of the second fluid supply/discharge port portion 2A; first and second ring nuts 91, 92 having internal thread portions 91n, 92n which are screwable with the external thread portions 1n, 9n; and an engagement ring 93 which is fittable into outer peripheral grooved 91m, 92m of the ring nuts 91, 92, and which has a substantially U-like section shape.

The ring nuts 91, 92 and the engagement ring 93 are made of a fluororesin such as PFA or PTFE, and which has a certain degree of flexibility. The fluid supply/discharge port portions 1A, 2A are connected and coupled to each other by the holding means I of the third other structure in the following operation procedure. The engagement ring 93 is previously engaged with the ring nuts 91, 92, whereby the integrated first and second ring nuts 91, 92 are previously formed. The integrated first and second ring nuts 91, 92 are screwed on the first and second fluid supply/discharge port portions 1A, 2A which are attracted together via the first gasket G1 (an example of the gasket G) and the second gasket G2 (an example of the gasket G) to be set to the assembled state, thereby forming a connecting structure for an integration panel and a fluid device. It is a matter of course that, in this case, the external thread portions 1n, 9n must be identical to each other. After the screwing, the ring nuts 91, 92 can be turned to be fastened more strongly, or to perform further fastening.

Alternatively, the following assembling procedure may be possible. In a state where the ring nuts 91, 92 are screwed to the corresponding external thread portions 1n, 9n, an attracting step is conducted in which the first and second fluid supply/discharge port portions 1A, 2A are attracted together via the first and second gaskets G1, G2, and the port portions are connected to each other in a sealed state where the first and second gaskets G1, G2 are pressingly contacted with each other. The attracting step is conducted by dedicated attracting means other than the holding means I. Thereafter, the engagement ring 93 is forcedly deformed by expanding the diameter, whereby the ring is fitted into the outer peripheral grooved 91m, 92m of the first and second ring nuts 91, 92 which are screwed in a state where the ring nuts are adjacent to the external thread portions 1n, 9n, respectively. As a result, a connecting structure for an integration panel and a fluid device is formed. Namely, the engagement ring 93 is engaged by forced fitting with the ring nuts 91, 92.

The thus configured holding means I literally has only a function of holding the sealed connection state of the first and second fluid supply/discharge port portions 1A, 2A via the gaskets G1, G2. However, the ring nuts 91, 92 and the engagement ring 93 are relatively rotatable, and therefore both of the ring nuts 91, 92 can singly rotatingly move. In the case where the seal press contact force is reduced because of aging, occurrence of creep, or the like, a further fastening operation can be performed by forcedly rotating one or both of the ring nuts 91, 92.

### [Embodiment 6]

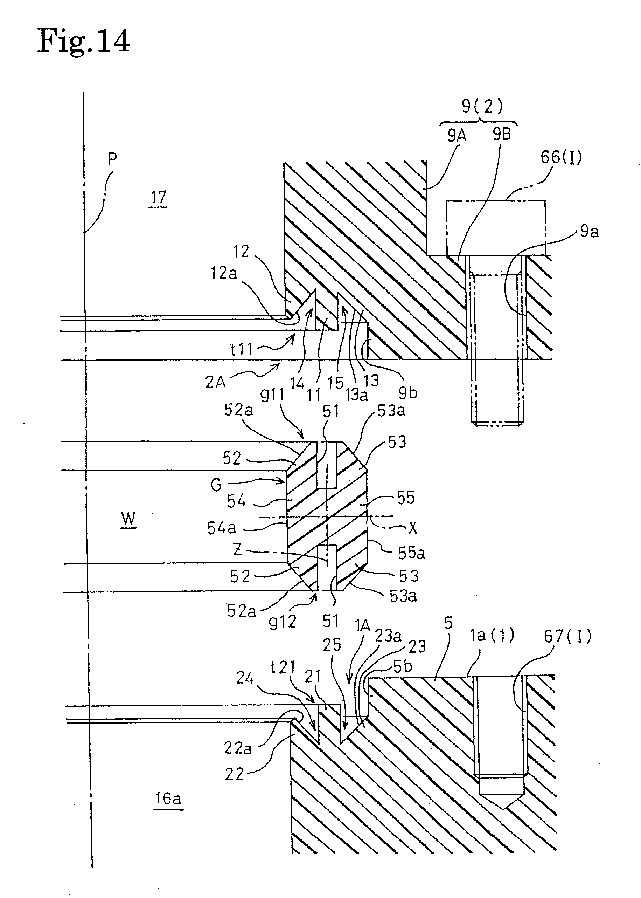

Figs. 13 and 14 show a connecting structure for an integration panel and a fluid device according to Embodiment 6. The connecting structure for an integration panel and a fluid device is of the single-flow path type that extends over the integration panel 1 in which a pair of circular pipe-like fluid passages 16, 19 are formed, and a valve (such as an on-off valve or a stop valve) 2 which is mounted on the upper face 1a of the panel via ring-like gaskets G, and that shares the vertical axis P. Namely, a pair of connecting structures for supply and discharge are configured so as to be identical to each other.

In the integration panel 1, as shown in Figs. 13 and 14, the pair of circular pipe-like fluid passages 16, 19 consisting of: vertical passages 16a, 19a which are vertically formed, and which are opened in the panel upper face 1a; and lateral passages 16b, 19b which laterally extend are formed in the panel member (or a block member) 5 made of a fluororesin such as PFA or PTFE. The portion where the supply/discharge fluid passages 16, 19 in the integration panel 1 are opened is referred to as a first fluid supply/discharge port portion 1A. In the first fluid supply/discharge port portion 1A, the circular pipe-like vertical passages 16a, 19a are formed as passages each having the axis P. In the first fluid supply/discharge port portion 1A, a lower first seal end portion t21 and lower second seal end portion t22 which have inner and outer annular projections 21 that are annular and centered at the axis P, and that are upward projected are formed in the outer diameter-side portions of the fluid passages 16, 19 which are opened in the upper end face of the port portion, respectively.

As shown in Figs. 13 and 14, the valve (an example of the fluid device) 2 has a valve case 6 which is made of a fluororesin such as PFA or PTFE, and which is circular in a vertical view. A lower end portion of the valve case 6 is formed as a second fluid supply/discharge port portion 2A having: a circular pipe-like supply-side fluid passage 17 which is vertically placed in a state where it is downward projected from the lower face 6a; and a circular pipe-like discharge-side fluid passage 18 which is vertically placed in a state where it is opened on a lateral side of the supply-side fluid passage 7 and laterally separated therefrom. In the second fluid supply/discharge port portion 2A, namely, each of the circular pipe-like supply/discharge fluid passages 17, 18 is formed as a passage having the axis P. A pair of mounting flanges 9 which have a pair of bolt insertion holes 9a, and which are made of a fluororesin such as PFA or PTFE are downward projectedly formed on the lower end of the valve case 6. Each of the mounting flanges 9 is formed by a pipe portion 9A having fluid passages 7, 8, and a flange portion (outward flange) 9B. The supply-side mounting flange 9 is formed into an upper first seal end portion t11 having an annular projection 11 which is downward projected, and the discharge-side mounting flange is formed into an upper second seal end portion t12 having an annular projection 11 which is upward projected.

The pair of gaskets G are identical to each other. Their structures will be described while taking the supply-side gasket G as an example. The gasket G is configured as a portion made of a fluororesin such as PFA or PTFE, and having: a pipe-like fluid path W which is formed so as to allow the vertical passage 3a and supply-side fluid passage 7 that are corresponding fluid passages of the supply-side upper and lower fluid supply/discharge port portions 1A, 2A, to communicate with each other; and a pair of upper and lower annular grooves 51, 51 which are formed in an outer diameter-side portion of the fluid path W so as to be fitted with the annular projections 11, 21 of the upper first seal end portion t11 and upper second seal end portion t12 that are formed on the end faces of the first and second fluid supply/discharge port portions 1A, 2A.

Namely, the section shape of the gasket G is formed into a substantially H-like shape which has the pair of upper and lower annular grooves 51, 51, and inner and outer peripheral walls 54, 55 for forming the annular grooves 51, 51, in which the upper and lower annular grooves 51, 51 have the same depth and width, and are vertically symmetric, and the inner and outer peripheral walls 54, 55 are laterally symmetric, and which is axisymmetric (or approximately axisymmetric) about both the vertical center line Z along the direction of the axis P of the first and second fluid supply/discharge port portions 1A, 2A, and the lateral center line X perpendicular to the vertical center line Z. Upper and lower end portions of the inner peripheral wall 54 are formed as tapered inner peripheral faces 52a, 52a in which upper and lower end portions of the fluid path W serving as the inner peripheral face 54a are outward inclined in a funnel-like manner. Also upper and lower end portions of the outer peripheral wall 55 are formed as tapered outer peripheral faces 53a, 53a in which upper and lower end portions of the outer peripheral face 55a are inward inclined.

On the inner- and outer-diameter sides of the annular projection 21 of the lower first seal end portion t21 of the first fluid supply/discharge port portion 1A of the integration panel 1, and the annular projection 11 of the upper first seal end portion t11 of the second fluid supply/discharge port portion 2A of the valve 2, annular press projections 12, 13, 22, 23 are formed to prevent inner and outer peripheral wall end portions 52, 53 which are projected in the direction of the axis P in order to form the annular groove 51 in the gasket G, from being expandingly deformed by fittings between the annular groove 51 and the annular projections 11, 21.

The structure relating to the annular press projections will be described about the gasket G and the upper first seal end portion t11. The inner and outer annular press projections 12, 13 are symmetric, and formed as annular projections that have a forward-narrowed shape, and that have a tapered outer peripheral face 12a and a tapered inner peripheral face 13a in which side peripheral faces on the side of the annular projections are inclined so that valley portions 14, 15 surrounded by the projections and the annular projection 11 have an inward-narrowed shape (upward narrowed shape). Namely, the upper first seal end portion t11 is a generic term of the annular projection 11, and the annular press projections 12, 13 and valley portions 14, 15 which are formed on the both of inner and outer sides of the annular projection.

Upper end portions of the inner and outer peripheral walls 54, 55 of the gasket G have annular seal projections (an example of the peripheral wall end portions) 52, 53 which are forward-narrowed, which have tapered inner and tapered outer peripheral faces 52a, 53a butting against the tapered outer and tapered inner peripheral faces 12a, 13a of the annular press projections 12, 13, respectively, and which are fittable into 14, 15. In a joined state (see Fig. 13), the annular seal projections 52, 53 which are upper end peripheral wall portions of the inner and outer peripheral walls 54, 55 enter into the corresponding valley portions 14, 15, the tapered outer peripheral face 12a of the upper first seal end portion t11 is pressingly contacted with the tapered inner peripheral face 52a of the gasket G, and the tapered inner peripheral face 13a of the upper first seal end portion t11 is pressingly contacted with the tapered outer peripheral face 53a of the gasket G.

Namely, an upper sealing portion g11 is formed by the annular groove 51 and the annular seal projections 52, 53 inside and outside thereof, in the upper end portion of the gasket G, and similarly a lower sealing portion g12 is formed in the lower end portion. The upper sealing portion g11 is fitted to the upper first seal end portion t11 to form a fitting sealing portion 10, and the lower sealing portion g12 is fitted to the lower second seal end portion t21 to form a fitting sealing portion 10.

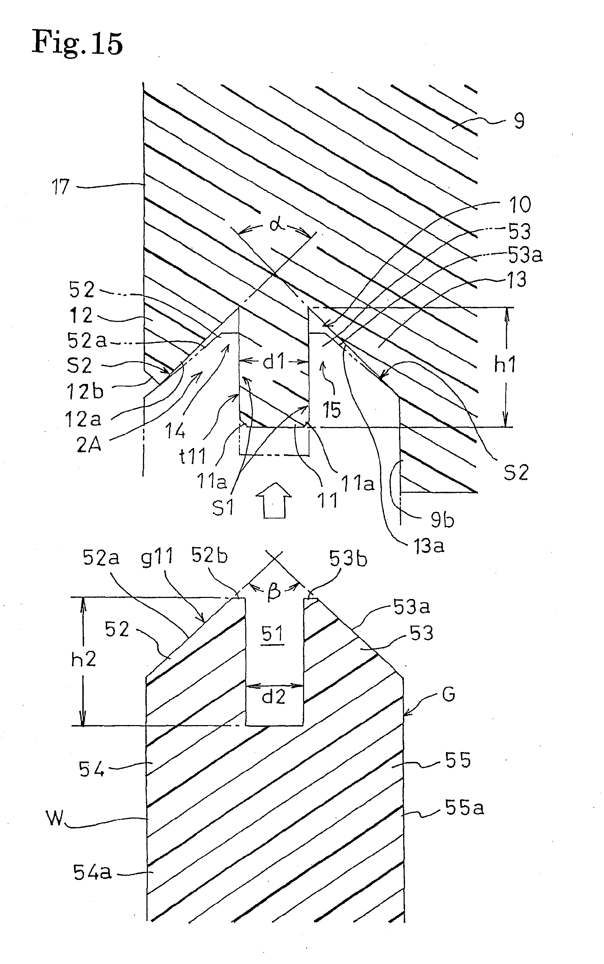

The fitting structure of the fitting sealing portions 10 will be described in detail about the upper first seal end portion t11 and the upper sealing portion g11 of the gasket G. As shown in Figs. 14 and 15, the inner and outer valley portions 14, 15 are symmetric, and the inner and outer annular seal projections 52, 53 are symmetric. The contained angle α° of the whole of the inner and outer valley portions 14, 15, and the opposed angle β° of the whole of the inner and outer annular seal projections 52, 53 are set to have the relationship of α° < β°. Preferably, the angles are set to have the relationship of α° + (5 to 15°) = β°. According to the configuration, in the joined state (described later) in which the upper annular projection 11 of the upper first seal end portion t11 is fitted to the annular groove 51, the tapered outer peripheral face 12a of the upper inner annular press projection 12, and the tapered inner peripheral face 52a of the upper inner annular seal projection 52 are in a state where they are pressingly contacted with each other in the innermost diameter portion (see the phantom line in Fig. 15), thereby attaining an advantage that they function as a secondary sealing portion S2 which prevents the fluid passing through the fluid passage W1 from entering between the tapered outer and tapered inner peripheral faces 12a, 52a.

Between the width d1 of the upper annular projection 11 and the width d2 of the upper annular groove 51, a relationship of d1 > d2 is established. Preferably, the widths are set to have the relationship of d1 x (0.6 to 0.8) d2. Between the projection length h1 of the upper annular projection 11 and the depth h2 of the upper annular groove 51, a relationship of h1 < h2 is established. According to the configuration, the upper annular projection 11 and the upper annular groove 51, more specifically, the both inner and outer side peripheral faces of the upper annular projection 11, and the corresponding inner and outer side peripheral faces of the upper annular groove 51 are strongly pressingly contacted with each other to form a primary sealing portion S1 which exhibits an excellent sealing performance of preventing the fluid from leaking. Moreover, the tapered outer peripheral face 12a of the upper inner annular press projection 12 surely butts against the tapered inner peripheral face 52a of the upper inner annular seal projection 52. Accordingly, there is an advantage that the above-mentioned secondary sealing portion S2 is satisfactorily formed.

The tip ends of the annular press projection 12 and the annular seal projections 52, 53 are formed into a shape which is cut so as not to form a pin angle, i.e., into an inclined cut face 12b and cut faces 52b, 53b. According to the configuration, even when the tip end of the upper inner annular press projection 12 is slightly expandingly deformed toward the fluid passage W, only a recess having a triangular section shape which is largely opened is formed in the middle of the fluid passage W because they have originally such a cut shape. The fluid existing in the recess easily flows out, and liquid stagnation is substantially prevented from being produced. Moreover, the opening angle of the recess, i.e., the contained angle between the inclined cut face 12b and the tapered inner peripheral face 52a is sufficiently large, and hence the possibility that liquid stagnation due to surface tension is caused is eliminated. The internal and external angles of the tip end of the annular projection 11 are formed as a chamfered shape 11a. Therefore, the press movement into the narrow annular groove 51 can be smoothly performed without causing any problem such as scuffing.

In the outer annular press projection 13, a lower-end inner peripheral portion 9b for forming a lower end portion of the valve case 6 exists in a state where it is continuous to a tapered inner peripheral face 13a of the annular press projection 13. The whole shape of the projection is different from that of the inner annular press projection 12. In the lower first seal end portion t21, an upper-end inner peripheral portion 5b for forming an upper end portion of the panel member 5 exists in a state where it is continuous to the tapered inner peripheral face 23a of the annular press projection 23, and also the whole shape is different from the inner annular press projection 22. The upper- and lower-end inner peripheral portions 5b, 9b serve as a guide in the case where the upper and lower sealing portions g11, g12 of the gasket G are fitted to the upper and lower first seal end portions t11, t21, and can perform a function of cooperating with the tapered inner peripheral faces 13a, 23a to prevent an outer peripheral wall 55 of the gasket G from being expandingly deformed.

Next, the holding means I will be described. As shown in Figs. 14 and 15, the holding means I is configured so that the first fluid supply/discharge port portion 1A of the integration panel 1 and the second fluid supply/discharge port portion 2A of the valve 2 are attracted to each other via the gasket G, and the attracting function holds the joined state in which the upper first seal end portion t11 of the first fluid supply/discharge port portion 1A and the upper sealing portion g11 of the gasket G1, and the lower first seal end portion t21 of the second supply/discharge port portion 2A and the lower sealing portion g12 of the gasket G1 are fitted to each other to form the fitting sealing portions 10. Namely, the annular projection 11 of the second fluid supply/discharge port portion 2A is fitted into the upper annular groove 51 of the gasket G, and the annular projection 21 of the first fluid supply/discharge port portion 1A is fitted into the lower annular groove 51 of the gasket G.

The specific structure of the holding means I is configured by: a pair of bolts 66 which are passed through bolt passage holes 9a of the outward flange 9B of the second fluid supply/discharge port portion 2A; and nut portions 67, 67 which are formed correspondingly with the pair of bolt passage holes 9a, 9a in the first fluid supply/discharge port portion 1A (the panel member 5). The holding means I is provided with an attracting function that, by a fastening operation of screwing the bolts 66 with the nut portions 67, the valve 2 can be attracted to the integration panel 1, and the attracted state can be held. In the case where the press contact forces of the fitting sealing portions 10 are reduced because of aging, occurrence of creep, or the like, the reduction can be coped with by further fastening the bolts 66, and therefore the excellent sealing property can be held.

### [Embodiment 7]

Fig. 16 shows a connecting structure for an integration panel and a fluid device according to Embodiment 7. This is a structure for connecting and coupling a filter 2 which is an example of a fluid device, with the integration panel 1. The connecting structure itself is identical with that of Embodiment 6 shown in Figs. 13 to 15. Therefore, identical components are denoted by the same reference numerals, and the detailed description of the components is omitted.

The filter 2 is configured by a main body case 2K, a lower case 2B, and a filter element 2C. In the lower case 2B, a supply-side fluid passage 17, a discharge-side fluid passage 18, and a pair of mounting flanges 9, 9 which are laterally projected in a state where it has the fluid passages 17, 18 are formed. The mounting flanges 9, 9, and the integration panel 1 are connected and coupled to each other via the gasket G.

### [Embodiment 8]

As shown in Fig. 17, a connecting structure for an integration panel and a fluid device according to Embodiment 8 is a connecting structure for the integration panel 1 and a bellows valve 2. The bellows valve 2 has a casing 2C consisting of an upper case, an intermediate case, and a lower case, and is configured by: a bellows (not shown) in which an outer peripheral portion is clamped between the upper case and the intermediate case; a valve element (not shown) in which an outer peripheral portion is clamped between the intermediate case and the lower case; a return spring (not shown) which is housed in the lower case; and the like.

The casing 2C is integrally equipped with the pair of mounting flanges 9, 9 which are laterally projected. The bellows valve 2 is connected and coupled via the gasket G to the upper face 1a of the integration panel 1 by using the mounting flanges 9, 9. The connecting structure for connecting the mounting flanges 9 and the upper face 1a of the integration panel 1 via the gasket G is identical with that of Embodiment 6 shown in Figs. 13 to 15, and the detailed description of the structure is omitted.

### [Embodiment 9]

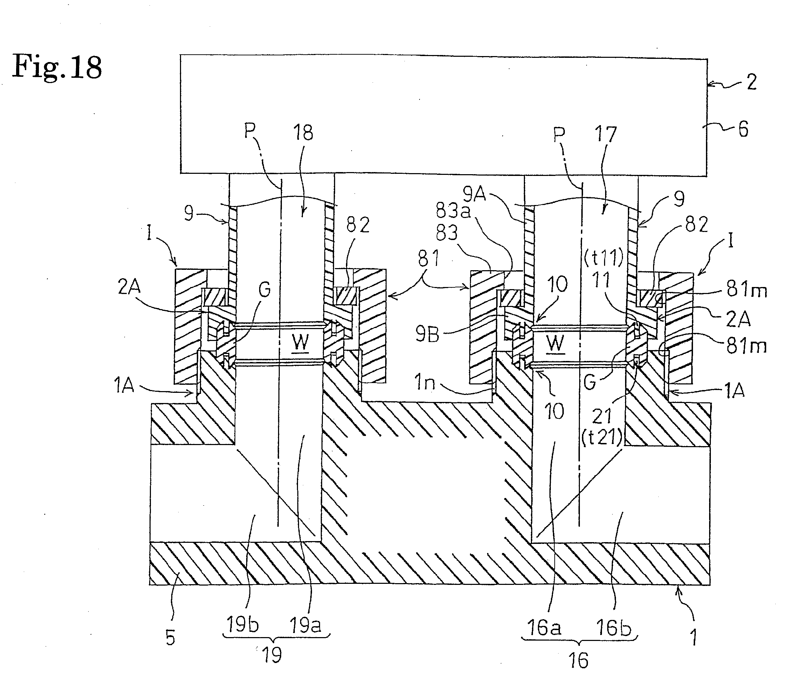

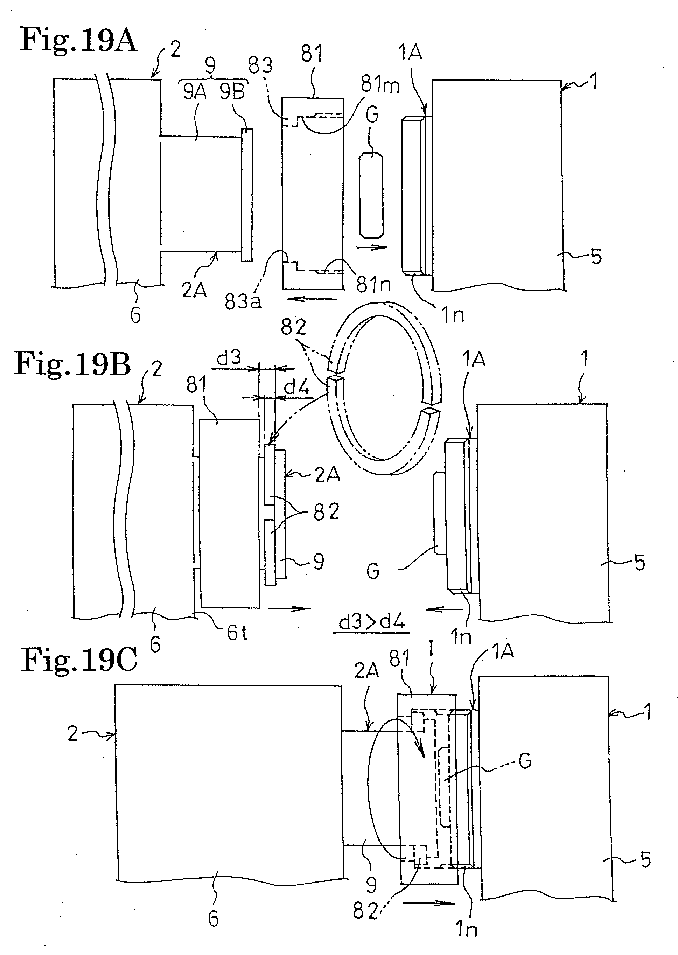

Figs. 18 and 19 show a connecting structure for an integration panel and a fluid device according to Embodiment 9. The connecting structure is different only in the holding means I from that of Embodiment 6. The holding means I of another structure will be described. In Figs. 18 and 19, portions corresponding to those of Embodiment 6 shown in Figs. 13 to 15 are denoted by corresponding reference numerals. The holding means I in Embodiment 9 is basically identical with the holding means I of the first other structure (see Figs. 5 and 6), and, as shown in Figs. 18 and 19, configured by: a cylindrical nut 81 having an internal thread portion 81n which is screwable with an external thread portion In formed on an outer peripheral portion of the projection-like first fluid supply/discharge port portion 1A that is formed on the upper face of the integration panel 1, and that is circular in a plan view; and a split ring 82 which has two or three or more split pieces, and which interferes in the direction of the axis P of the annular fluid passage 7 with the outward flange 9 that is formed in a lower end portion of the valve case 6 of the valve 2. The holding means I is configured as holding means having the attracting function in which, by a fastening operation of the cylindrical nut 81 in which the internal thread portion 81n is screwed with the external thread portion 1n of the first fluid supply/discharge port portion 1A, the fluid supply/discharge port portions 1A, 2A can be attracted in the direction along which they approach each other via the gasket G, and the attracted state can be held.

An opening portion 83a of an inward flange 83 which is formed on the side of the valve 2 (the upper side) of the cylindrical nut 81 is set to have a minimum internal diameter which is sufficient for allowing the passage of the outward flange 9. The outer diameter of the split ring 82 is set to be slightly smaller than the inner diameter of the internal thread portion 81n so that the split ring can freely enter into the cylindrical nut 81, and the inner diameter is set to a minimum dimension by which the split ring is fittable onto the outer diameter portion of the circular second fluid supply/discharge port portion 2A of the valve 2. In this case, in order to mount the split ring 82, the axial length of a small-diameter portion of the second fluid supply/discharge port portion 2A excluding the outward flange 9 must be larger than the sum of the axial length of the cylindrical nut 81 and the thickness of the split ring 82. Specifically, the conditions that, as shown in Fig. 19(b), the distance d3 between the cylindrical nut 81 in a state where it butts against a root portion 6t of the valve case 6, and the outward flange 9 is larger than the thickness d4 of the split ring 82 (d3 > d4) is imposed.

Between an inner end portion of the internal thread portion 81n of the cylindrical nut 81 and the inward flange 83, an inner peripheral face portion 81m which is axially slidable on the split ring 82, and which has a length in the direction of the axis P that covers the width dimension of the split ring 82 is formed into a flat inner peripheral face which is coaxial with the axis P. Namely, the inner diameter portion 81a between the internal thread portion 81n of the cylindrical nut 81 and the inward flange 83 is formed into a flat inner peripheral face which is coaxial with the supply-side fluid passage 7, and the dimensions are set to a fitting tolerance state where the inner diameter of the inner peripheral face portion 81m is very slightly larger than the outer diameter of the split ring 82 which is formed so as to have a rectangular section shape. By contrast, an outer diameter portion of the second fluid supply/discharge port portion 2A is formed into a flat outer peripheral face which is coaxial with the supply-side fluid passage 7, and has a diameter which is substantially equal to the inner diameter of the split ring 82. According to the configuration, it is possible to eliminate disadvantages that, when the cylindrical nut 81 is screwingly advanced, the split ring 82 is inclined to gouge, and that the pressing force in the direction of the axis P due to the screw advancement of the cylindrical nut 81 is not well transmitted to the outward flange 9. Therefore, the outward flange 9 can be effectively pressed, and the first and second fluid supply/discharge port portions 1A, 2A can be satisfactorily attracted in the direction along which they approach each other.

The fluid supply/discharge port portions 1A, 2A are connected and coupled to each other to a single-flow path connecting structure by the holding means I of the first other structure in the following operation procedure. First, as shown in Fig. 19(a), the cylindrical nut 81 is passed over the outward flange 9 to be fitted onto the outer periphery of the second fluid supply/discharge port portion 2A of the valve 2, and is moved to the innermost portion (until it butts against the root portion 6t). Then, as shown in Fig. 19(b), the split ring 82 is passed between the outward flange 9 and the tip end of the cylindrical nut 81, to be fitted onto the second fluid supply/discharge port portion 2A. At or prior to this, the gasket G may be attached to the end face of one of the fluid supply/discharge port portions 1A, 2A via provisional fittings between the annular projections 11, 21, 31, 41 and the annular grooves 51, 61. Next, the first fluid supply/discharge port portion 1A is placed on the second fluid supply/discharge port portion 2A via the gasket G, the cylindrical nut 81 is slidingly moved under this state, and a fastening operation [see Fig. 19(c)] is then conducted, whereby the connection state shown in Fig. 18 is obtained. In Fig. 7, for the sake of convenience in drawing, the integration panel 1 and valve 2 which are vertically stacked to each other are shown in a laterally arranged manner.

### [Embodiment 10]

Fig. 20 shows a connecting structure for an integration panel and a fluid device according to Embodiment 10. The connecting structure is different only in the holding means I from that of Embodiment 1. The holding means I of a fourth other structure will be described. As shown in Fig. 20, the holding means I of the fourth other structure is configured by: the projection-like first fluid supply/discharge port portion 1A which is formed on the upper face of the integration panel 1 in a state where an outer peripheral portion has an external thread portion 1n, and which is circular in a plan view; the flange portion 9 which is formed on a lower end portion of the valve case 6 in a state where an external thread portion 9n is formed in the outer peripheral portion of the second fluid supply/discharge port portion 2A; and a cylindrical nut 101 having an internal thread portion 101n which is screwable with the external thread portions 1n, 9n.

In the cylindrical nut 101, a gouged inner peripheral portion 101a the diameter of which is larger than the external thread portions 1n, 9n is formed between the internal thread portion 101n on the tip end side and an inward flange 102 on a basal end side, and the inward flange 102 is formed so as to have an inner diameter dimension at which the inward flange 102 interferes with the flange portion 9 in the direction of the axis P. In an assembled state shown in Fig. 20, the external thread portion 9n of the fluid device 2 is housed in the gouged inner peripheral portion 101a, and only the external thread portion 1n of the integration panel 1 and the internal thread portion 101n are screwed with each other. This state holds the state where the first and second fluid supply/discharge port portions 1A, 2A are attracted together.

In assembling, first, the internal thread portion 101n of the cylindrical nut 101 is screwed and fastened with the external thread portion 9n of the flange portion 9 of the fluid device 2, and passed over the external thread portion 9n to set a state where the external thread portion is rotatably housed in the gouged inner peripheral portion 101a. In this state, the internal thread portion 101n is screwed and fastened via the gasket G with the external thread portion In of the integration panel 1. Then, the cylindrical nut 101 and the external thread portion 9n of the flange portion 9 are relatively idle. Therefore, only the integration panel 1 is advanced by fastening, with the result that the attracted state where the integration panel 1 and the fluid device 2 are attracted together, and the fluid passages 16, 17 are communicatingly connected and coupled to each other in the sealed state by the gasket G is held. The structure is configured as the holding means I having the attracting function.

### [Embodiment 11]

Fig. 21 shows a connecting structure for an integration panel and a fluid device according to Embodiment 11. The connecting structure is different only in the holding means I from that of Embodiment 1. The holding means I of a fifth other structure will be described. The holding means I of the fifth other structure has a compromise configuration between the holding means I of the first other structure shown in Fig. 6, and the holding means I of the fourth other structure shown in Fig. 20. As shown in Fig. 21, the holding means is configured by: the projection-like first fluid supply/discharge port portion 1A which is formed on the upper face of the integration panel 1 in a state where an outer peripheral portion has an external thread portion 1n, and which is circular in a plan view; the flange portion 9 which is formed on a lower end portion of the valve case 6 in a state where an external thread portion 9n is formed in the outer peripheral portion of the second fluid supply/discharge port portion 2A; a cylindrical nut 111 having an internal thread portion 111n which is screwable with the external thread portions 1n, 9n; and a split ring 112.

In the cylindrical nut 111, a gouged inner peripheral portion 111a the diameter of which is larger than the external thread portions 1n, 9n is formed between the internal thread portion 111n on the tip end side and an inward flange 113 on a basal end side, and the inward flange 113 is formed so as to have an inner diameter portion 113a of a size at which the inward flange 113 does not interfere with the flange portion 9 in the direction of the axis P. The split ring 112 is formed by splitting a circular ring into three or more portions (for example, three sector members of a little less than 120 deg.), so as to allow operations that the split ring passes over the inward flange 113 and the internal thread portion 111n and then enters from the outside into the gouged inner peripheral portion 111a, and that the split members are assembled into a ring-like form in the gouged inner peripheral portion 111a. Alternatively, the split ring 112 may be configured by a single C-like member which is flexile to some extent so that, when it bends radially like a snap ring, it can enter into the gouged inner peripheral portion 111a.

An assembling process using the holding means I of the fifth other structure is performed in the following manner. Namely, a state in which the split ring 112 enters into the gouged inner peripheral portion 111a in the above-described manner is previously set. The subsequent steps are identical with those of the case of the holding means I of the first other structure (see Fig. 19) which is applied to the single-flow path connecting structure described above. Therefore, further description of the assembling procedure is omitted.

### [Other Embodiments]

(1) Various examples of a fitting structure of a fluid device and a gasket will be described. As shown in Fig. 10(a), in the fitting structure of the valve 2 which is a fluid device, and the first gasket G1, a shape in which one or more peripheral projections 11t for press contacting are formed as the annular projection 11 on inner and outer side peripheral faces of the structure may be employed. In a joined state, the peripheral projections 11t strongly butt against the annular groove 51 of the first gasket G1 to form the primary sealing portion S1. In this structure, the annular projection 11 and the annular groove 51 form a line-contact state in plural places, and hence there is an advantage that the friction resistance of insertion of the annular projection 11 into the annular groove 51 is reduced as compared with the case of surface contact. This configuration may be applied to the fitting structure of the integration panel 1 and the first gasket G1.

(2) As shown in the left portion of Fig. 10(b), in the fitting structure of the valve 2 which is a fluid device, and the first gasket G1, a structure may be possible in which the tapered peripheral faces 12a, 52a constitute the secondary sealing portion S2 where one or more peripheral projections 12t are formed on the tapered outer peripheral face 12a of the annular press projection 12 of the second fluid supply/discharge port portion 2A, and the peripheral projections 12t are pressingly contacted with the tapered inner peripheral face 52a of the peripheral wall end portion 52 of the first gasket G1. As shown in the right portion of Fig. 10(b), a structure may be possible in which, contrary to the above, one or more peripheral projections 53t are formed on the tapered inner peripheral face 53a of the first gasket G1, and the peripheral projections 53t are pressingly contacted with the tapered inner peripheral face 13a of the annular press projection 13 to constitute the secondary sealing portion S2. This configuration may be applied to the fitting structure of the integration panel 1 and the first gasket G1, and also to a structure comprising both Figs. 10(a) and 10(b).

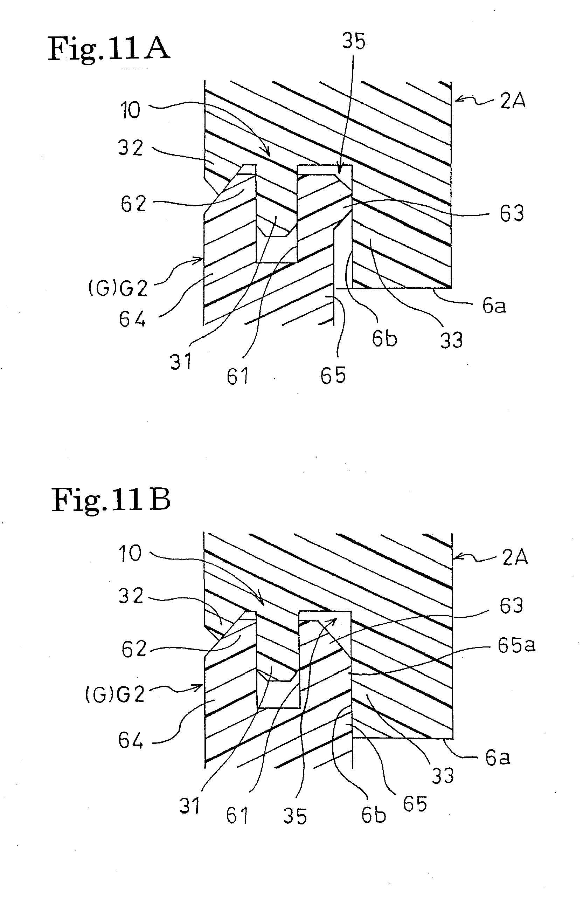

(3) As shown in Fig. 11(a), in the fitting structure of the valve 2 which is a fluid device, and the second gasket G2, a structure may be possible in which the outer peripheral wall end portion 63 of the second gasket G2 is formed as an annular lateral projection which is laterally projected from the outer peripheral wall 65, a valley 35 on the outer diameter side is formed into a columnar shape, and the annular lateral projection 63 is pressingly contacted with the lower-end inner peripheral portion 6b of the annular press projection 33 of the second fluid supply/discharge port portion 2A. In this structure, a strong press contact force is applied between the outer peripheral wall end portion 63 of the second gasket G2 and the annular projection 31, and the outer peripheral wall 65 other than the outer peripheral wall end portion 63 is not contacted with the lower-end inner peripheral portion 6b. Therefore, the friction resistance of insertion of the outer peripheral wall end portion 63 into the valley 35 is reduced. As a result, a load for inserting the annular projection 31 into the annular groove 61 is reduced, thereby providing an advantage that the structure is easily assembled. The fitting structure of the inner peripheral wall end portion 62 and the annular press projection 32 on the inner peripheral side is equivalent to that of Embodiment 1 shown in Figs. 1 to 3.

(4) As shown in Fig. 11(b), in the fitting structure of the valve 2 which is a fluid device, and the second gasket G2, a structure may be possible in which the second gasket G2 has a laterally symmetric shape in which the tapered peripheral faces 62a, 63a are formed in the upper ends of the inner and outer peripheral walls 64, 65 (identical with the second gasket G2 in Embodiment 1), and the lower-end inner peripheral portion 6b of the annular press projection 33 which forms the columnar valley 35 makes surface contact with the outer peripheral face 65a of the outer peripheral wall 65. In this case, because of the surface contact, an operation force for inserting the annular projection 31 into the annular groove 61 is slightly increased, but a sufficient press contact force [substantially equivalent to that in the case of the configuration of Fig. 11(a)] is applied between the annular projection 31 and the outer peripheral wall end portion 63 of the second gasket G2. The configurations shown in Figs. 11(a) and 11(b) may be applied to the fitting structure of the integration panel 1 and the second gasket G2.

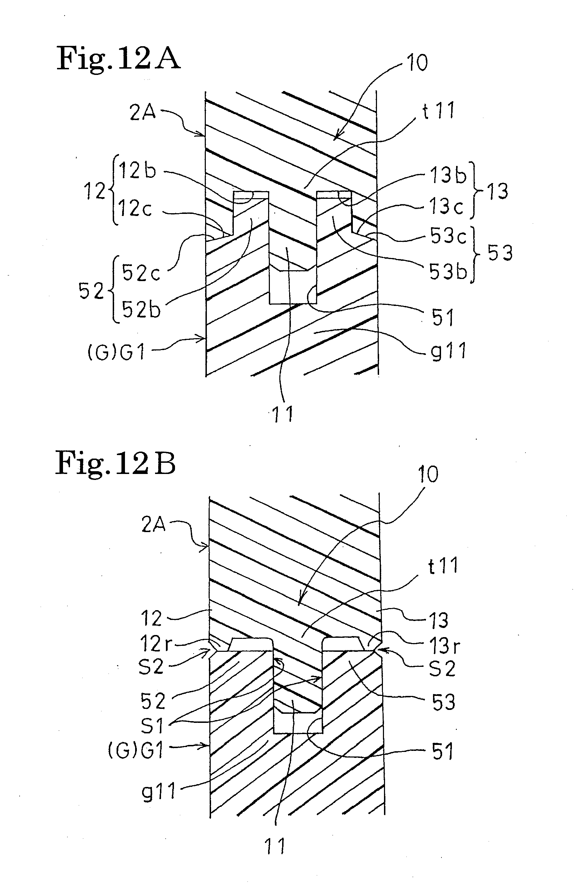

(5) As shown in Fig. 12 (a), in the fitting structure of the valve 2 which is a fluid device, and the first gasket G1, a structure may be possible in which the inner and outer peripheral wall end portions 52, 53 of the upper sealing portion g11 of the first gasket G1 are configured by small annular projections 52b, 53b which are projected in the direction of the axis P, and tapered top faces 52c, 53c which are inward and outward continuous in the root portions of the projections, and the annular press projections 12, 13 of the upper first seal end portion t11 of the second fluid supply/discharge port portion 2A are configured by annular grooves 12b, 13b which are to be fitted to the small annular projections 52b, 53b, and tapered lower faces 12c, 13c which are to butt against the tapered top faces 52c, 53c.

In a state where the tapered top faces 52c, 53c butt against the tapered lower faces 12c, 13c, the small annular projections 52b, 53b and the annular grooves 12b, 13b are set so that a gap exists therebetween in the direction of the axis P. According to the configuration, the fitting between the small annular projections 52b, 53b and the annular grooves 12b, 13b blocks the inner and outer peripheral wall end portions 52, 53 from being expandingly deformed. Therefore, the effective primary sealing portion S1 due to the strong butting of the annular projection 11 and the annular groove 51, and the effective secondary sealing portion S2 due to the butting of the tapered top faces 52c, 53c and the tapered lower faces 12c, 13c are formed. It is possible to realize a connecting structure in which sealing can be satisfactorily performed without producing liquid stagnation.

(6) As shown in Fig. 12(b), a structure may be possible in which both side of the annular projection 11 of the second fluid supply/discharge port portion 2A of the valve 2 are formed as annular flat shoulder portions 12, 13, the inner and outer peripheral wall end portions 52, 53 of both sides of the annular groove 51 of the first gasket G1 have a flat end face, the inner and outer annular flat shoulder portions 12, 13 basically make surface-to-surface contacts with the inner and outer peripheral wall end portions 52, 53, and rips 12r, 13r which have annular projections are formed on the inner and outer ends of the inner and outer peripheral wall end portions 52, 53. In this case, each of combinations of the inner rip 12r and the inner peripheral wall end portion 52, and the outer rip 13r and the outer peripheral wall end portion 53 forms the secondary sealing portion S2.

(7) The outer-diameter side second gasket G2 in the connecting structure of an integration panel and a fluid device shown in Figs. 1 to 3, and the gasket G in the connecting structure for an integration panel and a fluid device shown in Figs. 13 to 15 may have a structure in which, although not illustrated, the upper and lower ends of the outer peripheral walls 65, 55 are shorter than the inner peripheral walls 64, 54 and formed simply by horizontally cutting. The outer peripheral wall 65 of the outermost-diameter side second gasket G2 in the multiplex flow path connecting structure for an integration panel and a fluid device, and the outer peripheral wall 55 of the gasket G of the single-flow path connecting structure for an integration panel and a fluid device may not be provided with the sealing function. The first gasket G1, the second gasket G2, and the gasket G in the embodiments have the shape which is vertically and laterally symmetric. Alternatively, for example, they may have a shape in which the inner and outer peripheral walls have different lengths and thicknesses, or which is vertically asymmetric, and are not restricted to the illustrated shapes [see Fig. 11(a)]. Furthermore, it is possible to realize a connecting structure for a triplex or more flow path integration panel (multiplex flow path type) in which one or plural annular fluid passages are formed outside the outer annular fluid passage 8, and a fluid device. In this structure, a configuration where, in gasket portions other than the gasket portion existing in the outermost side, their inner and outer peripheral faces function also as fluid passages may be employed.

The term "fluid device" in the invention is defined as a generic term of devices relating to fluid, such as a valve, a pump, an accumulator, a fluid storage vessel, a heat exchanger, a regulator, a pressure gage, a flowmeter, a heater, and a flanged pipe, or in summary devices other than an integration panel. As the holding means having the attracting function, a turn buckle type structure (example: a structure in which, in the structure shown in Fig. 9, one of the external thread portions 1n, 9n is formed as a reverse thread, and a turn-buckle nut straddling over the external thread portions 1n, 9n is screwed) may be employed.

## Claims

1. A connecting structure for an integration panel and a fluid device, wherein
when a first fluid supply/discharge port portion of an integration panel having said first fluid supply/discharge port portion where a pipe-like fluid passage or an annular fluid passage, and one or more annular fluid passages are concentrically formed and opened, and a second fluid supply/discharge port portion of a fluid device having said second fluid supply/discharge port portion where a pipe-like fluid passage or an annular fluid passage, and one or more annular fluid passages are concentrically formed and opened are to be communicatingly connected to each other in a state where respective ones of said plural fluid passages correspond to each other, and are sealed by plural ring-like gaskets interposed between said first fluid supply/discharge port portion and said second fluid supply/discharge port portion,
in said first fluid supply/discharge port portion and said second fluid supply/discharge port portion, annular projections are formed on outer-diameter portions of said fluid passages which are opened in end faces,
said gaskets are configured by flexible materials having: fluid paths which are formed to allow said corresponding fluid passages of said first and second fluid supply/discharge port portions to communicate with each other; and a pair of annular grooves which are formed on outer-diameter portions of said fluid paths to be fitted respectively to said annular projections formed on said end faces of said first and second fluid supply/discharge port portions,
holding means is equipped for holding a joined state where said first fluid supply/discharge port portion and said second fluid supply/discharge port portion are attracted to each other via said plural gaskets, and said annular projections of said first fluid supply/discharge port portion and said annular grooves of one ends of said gaskets, and said annular projections of said second fluid supply/discharge port portion and said annular grooves of other ends of said gaskets are fitted respectively to each other to form a fitting sealing portion, and
in said plural gaskets, an intermediate gasket in which said fluid passages exist on both inner and outer diameter sides in the joined state is formed in a state where an outer peripheral portion of said gasket is a wall for forming an annular fluid path through which said annular fluid passage of said first fluid supply/discharge port portion existing on the outer diameter side of said intermediate gasket communicates with said annular fluid passage of said second fluid supply/discharge port portion.

2. A connecting structure for an integration panel and a fluid device, wherein
when a first fluid supply/discharge port portion of an integration panel having said first fluid supply/discharge port portion where pipe-like fluid passages are opened, and a second fluid supply/discharge port portion of a fluid device having said second fluid supply/discharge port portion where pipe-like fluid passages are opened are to be communicatingly connected to each other in a state where said fluid passages are sealed by a ring-like gasket interposed between said first fluid supply/discharge port portion and said second fluid supply/discharge port portion,
in said first fluid supply/discharge port portion and said second fluid supply/discharge port portion, annular projections are formed on outer-diameter portions of said fluid passages which are opened in end faces,
said gasket is configured by a flexible material having: a fluid path which is formed to allow said corresponding fluid passages of said first and second fluid supply/discharge port portions to communicate with each other; and a pair of annular grooves which are formed on an outer-diameter portion of said fluid path to be fitted respectively to said annular projections formed on said end faces of said first and second fluid supply/discharge port portions, and
holding means is equipped for holding a joined state where said first fluid supply/discharge port portion and said second fluid supply/discharge port portion are attracted to each other via said gasket, and said annular projection of said first fluid supply/discharge port portion and said annular groove of one end of said gasket, and said annular projections of said second fluid supply/discharge port portion and said annular groove of another end of said gasket are fitted respectively to each other to form a fitting sealing portion.

3. A connecting structure for an integration panel and a fluid device according to claim 2, wherein said first fluid supply/discharge port portion is formed in a plural number in said integration panel, said second fluid supply/discharge port portion is formed in said fluid device in a plural number corresponding to an existing number of said first fluid supply/discharge port portions, and said plural first and second fluid supply/discharge port portions are configured in a same plane so as to be commumicatingly connectable to each other via said gasket.

4. A connecting structure for an integration panel and a fluid device according to claim 1 or 2, wherein annular press projections are formed on the inner and outer diameter sides of said annular projections on said end faces of said first and second fluid supply/discharge port portions, said annular press projections suppressing or blocking inner and outer peripheral wall end portions which are projected in an axial direction in order to form said annular groove in said gasket, from being expandingly deformed by fittings between said annular groove and said annular projections.

5. A connecting structure for an integration panel and a fluid device according to claim 4, wherein, in the joined state, said peripheral wall end portions and said annular press projections are pressingly contacted with each other to form a sealing portion.

6. A connecting structure for an integration panel and a fluid device according to claim 5, wherein said annular press projections are formed on a forward-narrowed annular projection having tapered peripheral faces in which a side peripheral face on a side of said annular press projections is inclined so that valley portions surrounded by said annular press projections and said annular projections have a forward-narrowed shape, said peripheral wall end portions are formed into forward-narrowed annular projections which have tapered peripheral faces butting against tapered peripheral faces of said annular press projections, and which are enterable into said valley portions, and, in the joined state, said peripheral wall end portions enter into said valley portions to cause said tapered peripheral faces to be pressingly contacted with each other.

7. A connecting structure for an integration panel and a fluid device according to claim 1 or 2, wherein a section shape of said gasket has a substantially H-like shape which is axisymmetric about both a center line along the direction of an axis of said first and second fluid supply/discharge port portions, and a center line perpendicular to the center line.

8. A connecting structure for an integration panel and a fluid device according to claim 1 or 2, wherein said holding means performs an attracting function of attracting said first fluid supply/discharge port portion and said second fluid supply/discharge port portion to obtain the joined state.

9. A connecting structure for an integration panel and a fluid device according to claim 8, wherein said holding means has: an outward flange which is formed on an end portion of at least one of said first fluid supply/discharge port portion and said second fluid supply/discharge port portion; a through hole formed in said outward flange; and a bolt to be screwed through said through hole with a nut portion disposed in another of said first fluid supply/discharge port portion and said second fluid supply/discharge port portion, and
said first fluid supply/discharge port portion and said second fluid supply/discharge port portion are attracted to each other via said gasket by screwing said bolt with said nut portion to be fastened.

10. A connecting structure for an integration panel and a fluid device according to claim 8, wherein said holding means is configured by: a cylindrical nut comprising an internal thread portion which is screwable with an external thread portion formed on an outer peripheral portion of at least one of said first fluid supply/discharge port portion and said second fluid supply/discharge port portion; and a split ring which is fitted onto an end portion of another of said first fluid supply/discharge port portion and said second fluid supply/discharge port portion so as to interfere with an outward flange which is formed on an end portion of the other of said first fluid supply/discharge port portion and said second fluid supply/discharge port portion, in the direction of an axis of said first and second fluid supply/discharge port portions,
an inward flange is formed on one end portion of said cylindrical nut, said inward flange having an opening portion which allows passage of said outward flange, and which interferes with said split ring in the direction of the axis, and
said first fluid supply/discharge port portion and said second fluid supply/discharge port portion are attracted to each other via said gasket by fastening said cylindrical nut to the external thread portion.

11. A connecting structure for an integration panel and a fluid device according to claim 1 or 2, wherein said gasket is formed by a fluororesin.

12. A connecting structure for an integration panel and a fluid device according to claim 1 or 2, wherein said first and second fluid supply/discharge port portions are formed by a fluororesin.
